# EUROPEAN PATENT APPLICATION

(11) **EP 4 597 895 A1**
(43) Date of publication of application: **06.08.2025**
(21) Application number: 23870123.9
(22) Date of filing: 30.08.2023
(51) Int. Cl.: H04L 5/00, H04W 76/10

(54) **CONTROL-PLANE SIGNALING TRANSMISSION METHOD AND APPARATUS, AND STORAGE MEDIUM**

(30) Priority: 30.09.2022 CN 202211218279
(71) Applicant: Datang Mobile Communications Equipment Co., Ltd., Beijing 100085 (CN)
(72) Inventor: CHEN, Li, Beijing 100085 (CN); SUN, Shaohui, Beijing 100085 (CN); ZHAO, Jinbo, Beijing 100085 (CN); CHEN, Shanzhi, Beijing 100085 (CN)
(74) Representative: Ipsilon
(86) International application number: PCT/CN2023/115782
(87) International publication number: WO 2024/066882

(57) **Abstract**

Provided in the embodiments of the present disclosure are a control-plane signaling transmission method and apparatus, and a storage medium. The control-plane signaling transmission method is applied to a second DDU, and comprises: when a terminal moves from a first DDU to a service range of a second DDU, activating an air interface protocol stack corresponding to an SRB, wherein the SRB is continuous between the first DDU and the second DDU; and transmitting control-plane signaling with the terminal.

## Description

### CROSS-REFERENCES TO RELATED APPLICATIONS

The present application claims priority to Chinese Patent Application No. 202211218279.1 filed on September 30, 2022, entitled "Control-Plane Signaling Transmission Method and Apparatus, and Storage Medium", which is hereby incorporated by reference in its entirety.

### FIELD

The present application relates to the field of communications, and in particular, to methods and apparatuses for control-plane signaling transmission, and a storage medium.

### BACKGROUND

The control plane protocol stack of the 5th generation mobile communication (5G) is hard partitioned between a central unit (CU) and a distributed unit (DU). A signaling radio bearer (SRB) generated by a radio resource control (RRC) layer is fixedly connected to a packet data convergence protocol (PDCP) entity when established, and then fixedly connected to a radio link control (RLC) entity and a media access control (MAC) entity.

In the next generation mobile communication system, a user-centered network is introduced, and cloud-based control plane technology is introduced in the user-centered network to make control-plane signaling valid in a very large area. If the transmission scheme of control-plane signaling in the above related art is adopted, when a terminal/user equipment (UE) moves from one distributed data unit (DDU) to another DDU, the SRB needs to be re-established, which results in a problem of high transmission delay of control-plane signaling.

### BRIEF SUMMARY

Embodiments of the present application provide methods and apparatuses for transmitting control-plane signaling, and a storage medium, to solve the problem of high transmission delay of control-plane signaling in the related art.

Embodiments of the present application provide a method for control-plane signaling transmission, performed by a second distributed data unit (DDU), including:
in case that a terminal moves from a service range of a first DDU to a service range of the second DDU, activating an air interface protocol stack corresponding to a target signaling radio bearer (SRB) of the terminal, where the target SRB is continuous between the first DDU and the second DDU; and
transmitting control-plane signaling with the terminal.

In some embodiments, before the terminal moves from the service range of the first DDU to the service range of the second DDU, the method further includes:
receiving control-plane signaling configuration information transmitted from a cloud-based control unit (CCU); and
establishing the air interface protocol stack corresponding to the target SRB based on the control-plane signaling configuration information.

In some embodiments, the method further includes:
receiving control-plane signaling configuration information transmitted from a cloud-based control unit (CCU); and
establishing the air interface protocol stack corresponding to the target SRB based on the control-plane signaling configuration information.

In some embodiments, before receiving the control-plane signaling configuration information transmitted from the CCU, the method further includes:
transmitting first information to the CCU, where the first information is used to request for the control-plane signaling configuration information.

In some embodiments, the method further includes:
receiving a transmission state report of the target SRB transmitted from the first DDU, where the first DDU is a DDU providing service to the terminal before the terminal moves to the service range of the second DDU.

In some embodiments, the method further includes:
receiving a transmission state report of the target SRB transmitted from a cloud-based control unit (CCU).

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the method further includes:
receiving a first packet data convergence protocol (PDCP) service data unit (SDU) transmitted from a cloud-based control unit (CCU); and
allocating a sequence number for the first PDCP SDU based on a transmission state report of the target SRB, where the sequence number allocated for the first PDCP SDU is equal to a sequence number allocated for a next PDCP SDU as indicated in the transmission state report of the target SRB.

In some embodiments, the method further includes:
receiving a packet data convergence protocol (PDCP) service data unit (SDU), containing downlink control-plane signaling not successfully received by the first DDU, transmitted from a cloud-based control unit (CCU).

In some embodiments, the method further includes:
receiving a packet data convergence protocol (PDCP) service data unit (SDU) containing uplink control-plane signaling not successfully received by the first DDU transmitted from the terminal.

In some embodiments, the method further includes:
receiving, from the first DDU, a packet data convergence protocol (PDCP) service data unit (SDU) containing downlink control-plane signaling not successfully transmitted from the first DDU; and
re-transmitting, to the terminal, based on a transmission state report of the target SRB, a packet data convergence protocol (PDCP) service data unit (SDU) containing downlink control-plane signaling not successfully transmitted from the first DDU, where a sequence number of the PDCP SDU, containing downlink control-plane signaling not successfully transmitted from the first DDU, re-transmitted to the terminal is equal to a sequence number of the PDCP SDU containing the downlink control-plane signaling not successfully transmitted from the first DDU as indicated in the transmission state report of the target SRB.

In some embodiments, the method further includes:
receiving a radio resource control (RRC) protocol data unit (PDU), containing control-plane signaling, transmitted from the first DDU and an RRC PDU, containing control-plane signaling, transmitted from the terminal, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the terminal.

In some embodiments, the method further includes:
receiving a radio resource control (RRC) protocol data unit (PDU), containing control-plane signaling, transmitted from the terminal, where the RRC PDU containing control-plane signaling is allocated a sequence number by a cloud-based control unit (CCU), and RRC PDUs corresponding to different SRBs are ordered separately; and
transmitting the RRC PDU containing control-plane signaling to the CCU, where the RRC PDU containing control-plane signaling is used for duplicate detection by the CCU.

In some embodiments, the method further includes:
receiving a radio resource control (RRC) protocol data unit (PDU), containing control-plane signaling, transmitted from a cloud-based control unit (CCU), where the RRC PDU containing control-plane signaling is allocated a sequence number by the CCU, and RRC PDUs corresponding to different SRBs are ordered separately; and
transmitting the RRC PDU containing control-plane signaling to the terminal, where the RRC PDU containing control-plane signaling is used for duplicate detection by the terminal.

Embodiments of the present application provide a method for control-plane signaling transmission, performed by a cloud-based control unit (CCU), including:
establishing, in a second distributed data unit (DDU), an air interface protocol stack corresponding to a target signaling radio bearer (SRB) of a terminal, where the air interface protocol stack corresponding to the target SRB is used to be activated by the second DDU in case that the terminal moves from a service range of a first DDU to a service range of the second DDU, where the target SRB is continuous between the first DDU and the second DDU.

In some embodiments, establishing the air interface protocol stack corresponding to the target SRB of the terminal in the second DDU includes:
transmitting control-plane signaling configuration information to a DDU within a coverage range before the terminal moves from the service range of the first DDU to the service range of the second DDU, where the DDU within the coverage range includes the second DDU, and the control-plane signaling configuration information is used for the second DDU to establish the air interface protocol stack corresponding to the target SRB of the terminal.

In some embodiments, establishing the air interface protocol stack corresponding to the target SRB of the terminal in the second DDU includes:
transmitting control-plane signaling configuration information to the second DDU in case that the terminal moves from the service range of the first DDU to the service range of the second DDU, where the control-plane signaling configuration information is used for the second DDU to establish the air interface protocol stack corresponding to the target SRB of the terminal.

In some embodiments, before transmitting the control-plane signaling configuration information to the second DDU, the method further includes:
receiving first information transmitted from the second DDU, where the first information is used to request for the control-plane signaling configuration information.

In some embodiments, the method further includes:
transmitting a transmission state report of the target SRB to the second DDU in case that the terminal moves from the service range of the first DDU to the service range of the second DDU.

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the method further includes:
transmitting a first packet data convergence protocol (PDCP) service data unit (SDU) to the second DDU in case that the terminal moves from the service range of the first DDU to the service range of the second DDU, where the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;
or, the method further includes:
   transmitting a packet data convergence protocol (PDCP) service data unit (SDU) containing downlink control-plane signaling not successfully received by the first DDU to the second DDU in case that the terminal moves from the service range of the first DDU to the service range of the second DDU.

In some embodiments, the method further includes:
receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, where the RRC PDU containing control-plane signaling is allocated a sequence number by the CCU, and RRC PDUs corresponding to different SRBs are ordered separately; and
performing duplicate detection on the RRC PDU, containing control-plane signaling, transmitted from the first DDU and the RRC PDU, containing control-plane signaling, transmitted from the second DDU.

In some embodiments, the method further includes:
transmitting a radio resource control (RRC) protocol data unit (PDU) containing control-plane signaling to the second DDU in case that the terminal moves from the service range of the first DDU to the service range of the second DDU, where the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

In some embodiments, the method further includes:
allocating a sequence number for the RRC PDU containing control-plane signaling, where RRC PDUs corresponding to different SRBs are ordered separately.

Embodiments of the present application provide a method for control-plane signaling transmission, performed by a terminal, including:
transmitting control-plane signaling with a second distributed data unit (DDU) in case that the terminal moves from a service range of a first DDU to a service range of a second DDU, where the control-plane signaling is transmitted after an air interface protocol stack corresponding to a target signaling radio bearer (SRB) of the terminal is activated by the second DDU, and the target SRB is continuous between the first DDU and the second DDU.

In some embodiments, transmitting control-plane signaling with the second DDU includes:
receiving a transmission state report of the target SRB, where the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, transmitting control-plane signaling with the second DDU includes:
   receiving a packet data convergence protocol (PDCP) protocol data unit (PDU), not successfully transmitted from the first DDU, containing downlink control-plane signaling, transmitted from the second DDU.

In some embodiments, the method further includes:
receiving a radio resource control (RRC) protocol data unit (PDU), containing control-plane signaling, transmitted from the first DDU and an RRC PDU, containing control-plane signaling, transmitted from the second DDU, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the second DDU.

Embodiments of the present application provide a second distributed data unit (DDU) including a memory, a transceiver, and a processor, where
the memory is used for storing a computer program; the transceiver is used for receiving and transmitting data under control of the processor; and the processor is used for reading the computer program stored in the memory and performing the following operations:
in case that a terminal moves from a service range of a first DDU to a service range of the second DDU, activating an air interface protocol stack corresponding to a target signaling radio bearer (SRB) of the terminal, where the target SRB is continuous between the first DDU and the second DDU; and
transmitting control-plane signaling with the terminal.

In some embodiments, before the terminal moves from the service range of the first DDU to the service range of the second DDU, the processor is used for reading the computer program stored in the memory and performing the following operations:
receiving control-plane signaling configuration information transmitted from a cloud-based control unit (CCU); and
establishing the air interface protocol stack corresponding to the target SRB based on the control-plane signaling configuration information.

In some embodiments, the processor is further used for reading the computer program stored in the memory and performing the following operations:
receiving control-plane signaling configuration information transmitted from a cloud-based control unit (CCU); and
establishing the air interface protocol stack corresponding to the target SRB based on the control-plane signaling configuration information.

In some embodiments, before receiving the control-plane signaling configuration information transmitted from the CCU, the processor is further used for reading the computer program stored in the memory and performing the following operations:
transmitting first information to the CCU, where the first information is used to request for the control-plane signaling configuration information.

In some embodiments, the processor is further used for reading the computer program stored in the memory and performing the following operations:
receiving a transmission state report of the target SRB transmitted from the first DDU, where the first DDU is a DDU providing service to the terminal before the terminal moves to the service range of the second DDU.

In some embodiments, the processor is further used for reading the computer program stored in the memory and performing the following operations:
receiving a transmission state report of the target SRB transmitted from a cloud-based control unit (CCU).

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the processor is further used for reading the computer program stored in the memory and performing the following operations:
receiving a first packet data convergence protocol (PDCP) service data unit (SDU) transmitted from a cloud-based control unit (CCU); and
allocating a sequence number for the first PDCP SDU based on a transmission state report of the target SRB, where the sequence number allocated for the first PDCP SDU is equal to a sequence number allocated for a next PDCP SDU as indicated in the transmission state report of the target SRB;
or, the processor is further used for reading the computer program stored in the memory and performing the following operations:
   receiving a packet data convergence protocol (PDCP) service data unit (SDU), containing downlink control-plane signaling not successfully received by the first DDU, transmitted from a cloud-based control unit (CCU);
   or, the processor is further used for reading the computer program stored in the memory and performing the following operations:
      receiving a packet data convergence protocol (PDCP) service data unit (PDU), containing uplink control-plane signaling not successfully received by the first DDU, transmitted from the terminal;
      or, the processor is further used for reading the computer program stored in the memory and performing the following operations:
         receiving, from the first DDU, a packet data convergence protocol (PDCP) service data unit (SDU) containing downlink control-plane signaling not successfully transmitted from the first DDU; and
         re-transmitting, to the terminal, based on a transmission state report of the target SRB, a packet data convergence protocol (PDCP) service data unit (SDU) containing downlink control-plane signaling not successfully transmitted from the first DDU, where a sequence number of the PDCP SDU, containing downlink control-plane signaling not successfully transmitted from the first DDU, re-transmitted to the terminal is equal to a sequence number of the PDCP SDU containing the downlink control-plane signaling not successfully transmitted from the first DDU as indicated in the transmission state report of the target SRB;
         or, the processor is further used for reading the computer program stored in the memory and performing the following operations:
            receiving a radio resource control (RRC) protocol data unit (PDU), containing control-plane signaling, transmitted from the first DDU and an RRC PDU, containing control-plane signaling, transmitted from the terminal, where the RRC PDU containing control-plane signaling is allocated a sequence number by a cloud-based control unit (CCU), and RRC PDUs corresponding to different SRBs are ordered separately; and
            performing duplicate detection on the received RRC PDU, containing control-plane signaling, transmitted from the first DDU and the RRC PDU, containing control-plane signaling, transmitted from the terminal;
            or, the processor is further used for reading the computer program stored in the memory and performing the following operations:
               receiving a radio resource control (RRC) protocol data unit (PDU), containing control-plane signaling, transmitted from the terminal, where the RRC PDU containing control-plane signaling is allocated a sequence number by a cloud-based control unit (CCU), and RRC PDUs corresponding to different SRBs are ordered separately; and
               transmitting the RRC PDU containing control-plane signaling to the CCU, where the RRC PDU containing control-plane signaling is used for duplicate detection by the CCU;
               or, the processor is further used for reading the computer program stored in the memory and performing the following operations:
                  receiving a radio resource control (RRC) protocol data unit (PDU), containing control-plane signaling, transmitted from a cloud-based control unit (CCU), where the RRC PDU containing control-plane signaling is allocated a sequence number by the CCU, and RRC PDUs corresponding to different SRBs are ordered separately; and
                  transmitting the RRC PDU containing control-plane signaling to the terminal, where the RRC PDU containing control-plane signaling is used for duplicate detection by the terminal.

Embodiments of the present application provide a cloud-based control unit (CCU) including a memory, a transceiver, and a processor, where
the memory is used for storing a computer program; the transceiver is used for receiving and transmitting data under control of the processor; and the processor is used for reading the computer program stored in the memory and performing the following operations:
establishing, in a second distributed data unit (DDU), an air interface protocol stack corresponding to a target signaling radio bearer (SRB) of a terminal, where the air interface protocol stack corresponding to the target SRB is used to be activated by the second DDU in case that the terminal moves from a service range of a first DDU to a service range of the second DDU, where the target SRB is continuous between the first DDU and the second DDU.

In some embodiments, the processor is further used for reading the computer program stored in the memory and performing the following operations:
establishing the air interface protocol stack corresponding to the target SRB of the terminal in the second DDU includes:
transmitting control-plane signaling configuration information to a DDU within a coverage range before the terminal moves from the service range of the first DDU to the service range of the second DDU, where the DDU within the coverage range includes the second DDU, and the control-plane signaling configuration information is used for the second DDU to establish the air interface protocol stack corresponding to the target SRB of the terminal.

In some embodiments, the processor is further used for reading the computer program stored in the memory and performing the following operations:
establishing the air interface protocol stack corresponding to the target SRB of the terminal in the second DDU includes:
transmitting control-plane signaling configuration information to the second DDU in case that the terminal moves from the service range of the first DDU to the service range of the second DDU, where the control-plane signaling configuration information is used for the second DDU to establish the air interface protocol stack corresponding to the target SRB of the terminal.

In some embodiments, before transmitting the control-plane signaling configuration information to the second DDU, the processor is further used for reading the computer program stored in the memory and performing the following operations:
receiving first information transmitted from the second DDU, where the first information is used to request for the control-plane signaling configuration information.

In some embodiments, the processor is further used for reading the computer program stored in the memory and performing the following operations:
transmitting a transmission state report of the target SRB to the second DDU in case that the terminal moves from the service range of the first DDU to the service range of the second DDU.

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the processor is further used for reading the computer program stored in the memory and performing the following operations:
transmitting a first packet data convergence protocol (PDCP) service data unit (SDU) to the second DDU in case that the terminal moves from the service range of the first DDU to the service range of the second DDU, where the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;
or, the processor is further used for reading the computer program stored in the memory and performing the following operations:
   transmitting a packet data convergence protocol (PDCP) service data unit (SDU) containing downlink control-plane signaling not successfully received by the first DDU to the second DDU in case that the terminal moves from the service range of the first DDU to the service range of the second DDU.

In some embodiments, the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, where the RRC PDU containing control-plane signaling is allocated a sequence number by the CCU, and RRC PDUs corresponding to different SRBs are ordered separately; and
performing duplicate detection on the RRC PDU, containing control-plane signaling, transmitted from the first DDU and the RRC PDU, containing control-plane signaling, transmitted from the second DDU.

In some embodiments, the processor is further used for reading the computer program stored in the memory and performing the following operations:
transmitting a radio resource control (RRC) protocol data unit (PDU) containing control-plane signaling to the second DDU in case that the terminal moves from the service range of the first DDU to the service range of the second DDU, where the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

In some embodiments, the processor is further used for reading the computer program stored in the memory and performing the following operations:
allocating a sequence number for the RRC PDU containing control-plane signaling, where RRC PDUs corresponding to different SRBs are ordered separately.

Embodiments of the present application provide a terminal including a memory, a transceiver, and a processor, where
the memory is used for storing a computer program; the transceiver is used for receiving and transmitting data under control of the processor; and the processor is used for reading the computer program stored in the memory and performing the following operations:
transmitting control-plane signaling with a second distributed data unit (DDU) in case that the terminal moves from a service range of a first DDU to a service range of a second DDU, where the control-plane signaling is transmitted after an air interface protocol stack corresponding to a target signaling radio bearer (SRB) of the terminal is activated by the second DDU, and the target SRB is continuous between the first DDU and the second DDU.

In some embodiments, the processor is further used for reading the computer program stored in the memory and performing the following operations:
transmitting control-plane signaling with the second DDU includes:
receiving a transmission state report of the target SRB, where the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, the processor is further used for reading the computer program stored in the memory and performing the following operations:
   transmitting control-plane signaling with the second DDU includes:
   receiving a packet data convergence protocol (PDCP) protocol data unit (PDU), not successfully transmitted from the first DDU, containing downlink control-plane signaling, transmitted from the second DDU.

In some embodiments, the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the second DDU, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the second DDU.

Embodiments of the present application provide an apparatus for control-plane signaling transmission, including:
a first activating module, used for in case that a terminal moves from a service range of a first distributed data unit (DDU) to a service range of the second DDU, activating an air interface protocol stack corresponding to a target signaling radio bearer (SRB) of the terminal, where the target SRB is continuous between the first DDU and the second DDU; and
a first transmitting module, used for transmitting control-plane signaling with the terminal.

In some embodiments, the apparatus further includes:
a first receiving module, used for receiving control-plane signaling configuration information transmitted from a cloud-based control unit (CCU) before the terminal moves from the service range of the first DDU to the service range of the second DDU; and
a second establishing module, used for establishing the air interface protocol stack corresponding to the target SRB based on the control-plane signaling configuration information before the terminal moves from the service range of the first DDU to the service range of the second DDU.

In some embodiments, the apparatus further includes:
a second receiving module, used for receiving control-plane signaling configuration information transmitted from a cloud-based control unit (CCU); and
a third establishing module, used for establishing the air interface protocol stack corresponding to the target SRB based on the control-plane signaling configuration information.

In some embodiments, the apparatus further includes:
a first transmitting module, used for transmitting first information to the CCU before receiving the control-plane signaling configuration information transmitted from the CCU, where the first information is used to request for the control-plane signaling configuration information.

In some embodiments, the apparatus further includes:
a third receiving module, used for receiving a transmission state report of the target SRB transmitted from the first DDU, where the first DDU is a DDU providing service to the terminal before the terminal moves to the service range of the second DDU.

In some embodiments, the apparatus further includes:
a fourth receiving module, used for receiving a transmission state report of the target SRB transmitted from a cloud-based control unit (CCU).

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the apparatus further includes:
a fifth receiving module, used for receiving a first packet data convergence protocol (PDCP) service data unit (SDU) transmitted from a cloud-based control unit (CCU); and
a first allocating module, used for allocating a sequence number for the first PDCP SDU based on a transmission state report of the target SRB, where the sequence number allocated for the first PDCP SDU is equal to a sequence number allocated for a next PDCP SDU as indicated in the transmission state report of the target SRB.

In some embodiments, the apparatus further includes:
a sixth receiving module, used for receiving a packet data convergence protocol (PDCP) service data unit (SDU), containing downlink control-plane signaling not successfully received by the first DDU, transmitted from a cloud-based control unit (CCU).

In some embodiments, the apparatus further includes:
a seventh receiving module, used for receiving a packet data convergence protocol (PDCP) service data unit (SDU) containing uplink control-plane signaling not successfully received by the first DDU transmitted from the terminal.

In some embodiments, the apparatus further includes:
an eighth receiving module, used for receiving, from the first DDU, a packet data convergence protocol (PDCP) service data unit (SDU) containing downlink control-plane signaling not successfully transmitted from the first DDU; and
a second transmitting module, used for re-transmitting, to the terminal, based on a transmission state report of the target SRB, a packet data convergence protocol (PDCP) service data unit (SDU) containing downlink control-plane signaling not successfully transmitted from the first DDU, where a sequence number of the PDCP SDU, containing downlink control-plane signaling not successfully transmitted from the first DDU, re-transmitted to the terminal is equal to a sequence number of the PDCP SDU containing the downlink control-plane signaling not successfully transmitted from the first DDU as indicated in the transmission state report of the target SRB.

In some embodiments, the apparatus further includes:
a ninth receiving module, used for receiving a radio resource control (RRC) protocol data unit (PDU), containing control-plane signaling, transmitted from the first DDU and an RRC PDU, containing control-plane signaling, transmitted from the terminal, where the RRC PDU containing control-plane signaling is allocated a sequence number by a cloud-based control unit (CCU), and RRC PDUs corresponding to different SRBs are ordered separately; and
a first detecting module, used for performing duplicate detection on the received RRC PDU, containing control-plane signaling, transmitted from the first DDU and the RRC PDU, containing control-plane signaling, transmitted from the terminal.

In some embodiments, the apparatus further includes:
a tenth receiving module, used for receiving a radio resource control (RRC) protocol data unit (PDU), containing control-plane signaling, transmitted from the terminal, where the RRC PDU containing control-plane signaling is allocated a sequence number by a cloud-based control unit (CCU), and RRC PDUs corresponding to different SRBs are ordered separately; and
a third transmitting module, used for transmitting the RRC PDU containing control-plane signaling to the CCU, where the RRC PDU containing control-plane signaling is used for duplicate detection by the CCU.

In some embodiments, the apparatus further includes:
an eleventh receiving module, used for receiving a radio resource control (RRC) protocol data unit (PDU), containing control-plane signaling, transmitted from a cloud-based control unit (CCU), where the RRC PDU containing control-plane signaling is allocated a sequence number by the CCU, and RRC PDUs corresponding to different SRBs are ordered separately; and
a fourth transmitting module, used for transmitting the RRC PDU containing control-plane signaling to the terminal, where the RRC PDU containing control-plane signaling is used for duplicate detection by the terminal.

Embodiments of the present application provide an apparatus for control-plane signaling transmission, including:
a first establishing module, used for establishing, in a second distributed data unit (DDU), an air interface protocol stack corresponding to a target signaling radio bearer (SRB) of a terminal, where the air interface protocol stack corresponding to the target SRB is used to be activated by the second DDU in case that the terminal moves from a service range of a first DDU to a service range of the second DDU, where the target SRB is continuous between the first DDU and the second DDU.

In some embodiments, the first establishing module is further used for:
transmitting control-plane signaling configuration information to a DDU within a coverage range before the terminal moves from the service range of the first DDU to the service range of the second DDU, where the DDU within the coverage range includes the second DDU, and the control-plane signaling configuration information is used for the second DDU to establish the air interface protocol stack corresponding to the target SRB of the terminal.

In some embodiments, the first establishing module is further used for:
transmitting control-plane signaling configuration information to the second DDU in case that the terminal moves from the service range of the first DDU to the service range of the second DDU, where the control-plane signaling configuration information is used for the second DDU to establish the air interface protocol stack corresponding to the target SRB of the terminal.

In some embodiments, the apparatus further includes:
a twelfth receiving module, used for receiving first information transmitted from the second DDU before transmitting control-plane signaling configuration information to the second DDU, where the first information is used to request for the control-plane signaling configuration information.

In some embodiments, the apparatus further includes:
a fifth transmitting module, used for transmitting a transmission state report of the target SRB to the second DDU in case that the terminal moves from the service range of the first DDU to the service range of the second DDU.

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the apparatus further includes:
a sixth transmitting module, used for transmitting a first packet data convergence protocol (PDCP) service data unit (SDU) to the second DDU in case that the terminal moves from the service range of the first DDU to the service range of the second DDU, where the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;

In some embodiments, the apparatus further includes:
a seventh transmitting module, used for transmitting a packet data convergence protocol (PDCP) service data unit (SDU) containing downlink control-plane signaling not successfully received by the first DDU to the second DDU in case that the terminal moves from the service range of the first DDU to the service range of the second DDU.

In some embodiments, the apparatus further includes:
a thirteenth receiving module, used for receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, where the RRC PDU containing control-plane signaling is allocated a sequence number by the CCU, and RRC PDUs corresponding to different SRBs are ordered separately; and
a second detecting module, used for performing duplicate detection on the RRC PDU, containing control-plane signaling, transmitted from the first DDU and the RRC PDU, containing control-plane signaling, transmitted from the second DDU.

In some embodiments, the apparatus further includes:
an eighth transmitting module, used for transmitting a radio resource control (RRC) protocol data unit (PDU) containing control-plane signaling to the second DDU in case that the terminal moves from the service range of the first DDU to the service range of the second DDU, where the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

In some embodiments, the apparatus further includes:
a second allocating module, used for allocating a sequence number for the RRC PDU containing control-plane signaling, where RRC PDUs corresponding to different SRBs are ordered separately.

Embodiments of the present application provide an apparatus for control-plane signaling transmission, including:
a second transmitting module, used for transmitting control-plane signaling with a second distributed data unit (DDU) in case that the terminal moves from a service range of a first DDU to a service range of a second DDU, where the control-plane signaling is transmitted after an air interface protocol stack corresponding to a target signaling radio bearer (SRB) of the terminal is activated by the second DDU, and the target SRB is continuous between the first DDU and the second DDU.

In some embodiments, the second transmitting module is further used for:
receiving a transmission state report of the target SRB, where the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU.

In some embodiments, the second transmitting module is further used for:
receiving a packet data convergence protocol (PDCP) protocol data unit (PDU), not successfully transmitted from the first DDU, containing downlink control-plane signaling, transmitted from the second DDU.

In some embodiments, the apparatus further includes:
a fourteenth receiving module, used for receiving a radio resource control (RRC) protocol data unit (PDU), containing control-plane signaling, transmitted from the first DDU and an RRC PDU, containing control-plane signaling, transmitted from the second DDU, where the RRC PDU containing control-plane signaling is allocated a sequence number by a cloud-based control unit (CCU), and RRC PDUs corresponding to different SRBs are ordered separately; and
a third detecting module, used for performing duplicate detection on the received RRC PDU, containing control-plane signaling, transmitted from the first DDU and the RRC PDU, containing control-plane signaling, transmitted from the second DDU.

Embodiments of the present application further provide a processor-readable storage medium, where the processor-readable storage medium stores a computer program and the computer program is used for causing a processor to perform the method for control-plane signaling transmission as described above.

Embodiments of the present application further provide a computer-readable storage medium, where the computer-readable storage medium stores a computer program and the computer program is used for causing a computer to perform the method for control-plane signaling transmission as described above.

Embodiments of the present application further provide a communication device-readable storage medium, where the communication device-readable storage medium stores a computer program and the computer program is used for causing a communication device to perform the method for control-plane signaling transmission as described above.

Embodiments of the present application further provide a chip product-readable storage medium, where the chip product-readable storage medium stores a computer program and the computer program is used for causing a chip product to perform the method for control-plane signaling transmission as described above.

In the methods and apparatuses for transmitting control-plane signaling, and the storage medium provided in the embodiments of the present application, through flexible selection of control-plane signaling transmission paths and protocol stack mapping, continuous and reliable transmission of control-plane signaling designed for cloud-based control planes is enabled through the available air interface channel of the current terminal, which greatly reduces the delay of control-plane signaling transmission, and allows for the user-centered network.

### BRIEF DESCRIPTION OF THE DRAWINGS

To provide a clearer explanation of the solutions in the embodiments of the present application, a brief introduction is given to the accompanying drawings required for the description of the embodiments. The accompanying drawings in the following description are some embodiments of the present application. For those skilled in the art, other drawings may be obtained based on these drawings without creative labor.
FIG. 1 is a first schematic flowchart of a method for control-plane signaling transmission according to an embodiment of the present application;
FIG. 2 is a first signaling interaction diagram of an example scenario of a method for control-plane signaling transmission according to an embodiment of the present application;
FIG. 3 is a second signaling interaction diagram of an example scenario of a method for control-plane signaling transmission according to an embodiment of the present application;
FIG. 4 is a third signaling interaction diagram of an example scenario of a method for control-plane signaling transmission according to an embodiment of the present application;
FIG. 5 is a fourth signaling interaction diagram of an example scenario of a method for control-plane signaling transmission according to an embodiment of the present application;
FIG. 6 is a second schematic flowchart of a method for control-plane signaling transmission according to an embodiment of the present application;
FIG. 7 is a third schematic flowchart of a method for control-plane signaling transmission according to an embodiment of the present application;
FIG. 8 is a schematic structural diagram of a second distributed data unit (DDU) according to an embodiment of the present application;
FIG. 9 is a schematic structural diagram of a cloud-based control unit (CCU) according to an embodiment of the present application;
FIG. 10 is a schematic structural diagram of a terminal according to an embodiment of the present application;
FIG. 11 is a first schematic structural diagram of an apparatus for control-plane signaling transmission according to an embodiment of the present application;
FIG. 12 is a second schematic structural diagram of an apparatus for control-plane signaling transmission according to an embodiment of the present application; and
FIG. 13 is a third schematic structural diagram of an apparatus for control-plane signaling transmission according to an embodiment of the present application.

### DETAILED DESCRIPTION

In the 5G mobile network system, a 5G base station may be an integrated base station, where all user plane protocol stacks and functions are in one entity, and the 5G control plane protocol stack is hard partitioned between a central unit (CU) and a distributed unit (DU). A radio resource control (RRC) layer and a packet data convergence protocol (PDCP) layer are both located in the CU, which has a fixed interface with the DU. That is, a signaling radio bearer (SRB) generated by the RRC layer is fixedly connected to a PDCP entity during establishment, and then fixedly connected to a radio link control (RLC) entity and a media access control (MAC) entity. A non-access stratum (NAS) carries control-plane signaling from a core network to a terminal, while on the air interface, the control-plane signaling is carried by the SRB in the RRC layer. However, the RRC signaling is only valid within one cell, which is controlled by one CU and one DU.

In 6G systems, a user-centered network is introduced. The basic idea of the user-centered network is to flexibly organize network access points (APs) based on terminal location and service requirements, forming flexible cells to provide data transmission for terminals. In a user-centered network architecture, a cloud-based control unit (CCU) includes a management plane and a control plane, which perform traditional 5G control plane functions, as well as UE context management, AP or transmission/reception point (TRP) selection, and other functions. distributed data unit (DDU) refers to a distributed data unit used for localized data acquisition and transmission, with a PDCP layer located in DDU. User equipment (UE) is always at the center of a flexible cell serving the UE, and APs within the detectable range of the UE may serve as candidate sets to dynamically provide radio link services for the UE. The UE is associated with one or more APs, and the coverage range of the flexible cell is formed by all APs that may provide radio access services to the UE and that the UE may detect.

CCU adopts cloud-based technologies to ensure consistency of the control-plane signaling of the UE over a large area. For the UE, there is no need to perform a handover in case of moving between different APs. However, in specific implementation, it is necessary to solve the problem of how to transmit control-plane signaling on the available air interface channels of the UE. The transmission of control-plane signaling needs to be guaranteed to be sequential and lossless. Being sequential refers to that the orders in which control-plane signaling is received at the receiving end and transmitted at the transmitting end are the same, to make the control-plane signaling valid based on the true intention of the transmitting end, and to avoid the content of later signaling being overwritten by the content of earlier signaling due to disorderly reception and other reasons, which may lead to inconsistent understanding of control-plane signaling by the receiving and transmitting ends. Being lossless refers to that the control-plane signaling is not allowed to be lost. In 5G, a dedicated SRB uses an RLC acknowledged mode (AM) transmission. Once packet loss occurs, it triggers the radio link failure.

In the 5G architecture, the control-plane SRB of the RRC layer is associated with a fixed air interface protocol layer, and the control-plane signaling carried by the SRB is transmitted on the corresponding air interface protocol layer and physical channel. In case that UE access to a new cell, re-establishment of SRB is required, which increases the transmission delay of control-plane signaling. The introduction of cloud-based control plane technology in user-centered network enables control-plane signaling to be valid in a very large area. Correspondingly, it is necessary to solve how to map control-plane signaling to UE available channels for transmission.

Based on the above problems, the embodiments of the present application provide methods for control-plane signaling transmission. By flexibly selecting the control-plane signaling transmission paths and mapping the protocol stack, and establishing and activating corresponding air interface protocol stacks for serving AP of the UE, the control-plane signaling designed for cloud-based control plane may be continuously and reliably transmitted through the available path of the UE, which reduces the delay of control-plane signaling transmission.

To clarify the objects, solutions, and effects of the embodiments of the present application, a clear and complete description of the solution in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

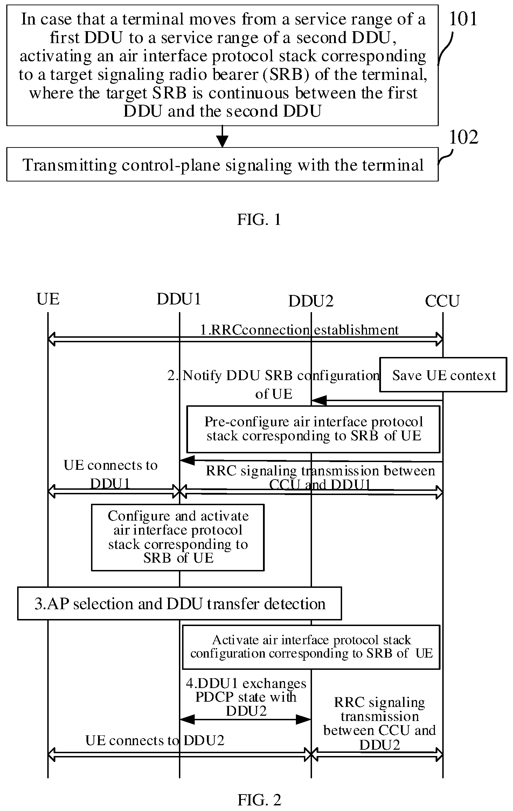

FIG. 1 is a first schematic flowchart of a method for control-plane signaling transmission according to an embodiment of the present application. As shown in FIG. 1, embodiments of the present application provide a method for control-plane signaling transmission, and its performing entity may be a second distributed data unit (DDU). The method includes the following.

Step 101: in case that a terminal moves from a service range of a first DDU to a service range of a second DDU, activating an air interface protocol stack corresponding to a target signaling radio bearer (SRB) of the terminal, where the target SRB is continuous between the first DDU and the second DDU.

In an embodiment, a cloud-based control unit (CCU) establishes the air interface protocol stack corresponding to the target SRB of the UE in the second DDU, where the target SRB is continuous between the first DDU and the second DDU and is one of the SRBs of the UE.

In case that the UE moves from the service range of the first DDU to the service range of the second DDU, the second DDU activates the air interface protocol stack corresponding to the target SRB.

The first DDU refers to a DDU providing service to the UE before the terminal moves to the service range of the second DDU, and the second DDU is a DDU with a service range into which the UE is going to move. The first DDU and the second DDU are both general terms, not specific to any particular DDU.

If a serving AP of the UE is connected to the second DDU, the air interface protocol stack corresponding to the target SRB is valid or activated.

The second DDU may be informed by the first DDU of the message that the UE moves from the first DDU, or the first DDU may transmit relevant information to the CCU, then the CCU may transmit the message to the second DDU, and the second DDU knows that the UE moves from the first DDU.

Step 102: transmitting control-plane signaling with the terminal.

In an embodiment, the terminal transmits control-plane signaling with the second DDU in case that the terminal moves from the service range of the first DDU to the service range of the second DDU.

In the method for control-plane signaling transmission provided in the embodiments of the present application, by establishing an air interface protocol stack corresponding to the target SRB of the UE in the second DDU, in case that the UE moves from the service range of the first DDU to the service range of the second DDU, the second DDU activates the air interface protocol stack. The UE does not need to perform a handover in case of moving between different APs. The control-plane signaling is transmitted from the second DDU and on the air interface transmission channel between the AP of the second DDU and the UE, which reduces the delay of control-plane signaling transmission.

In some embodiments, before the terminal moves from the service range of the first DDU to the service range of the second DDU, the method further includes:
receiving control-plane signaling configuration information transmitted from a cloud-based control unit (CCU); and
establishing the air interface protocol stack corresponding to the target SRB based on the control-plane signaling configuration information.

In an embodiment, an air interface protocol stack is established in advance before the UE moves to the second DDU. Firstly, the CCU needs to transmit control-plane signaling configuration information to the DDUs within the coverage range, the DDUs within the coverage range including the second DDU. The second DDU receives the control-plane signaling configuration information transmitted from the CCU, and establishes the air interface protocol stack corresponding to the target SRB based on the control-plane signaling configuration information.

In case that the UE accesses a network, the CCU establishes a radio resource control (RRC) connection with the UE and stores the UE context, which includes a UE identifier, control plane bearer configuration, and user plane bearer configuration, etc.

The CCU submits the control-plane signaling configuration information of the RRC to DDUs within the coverage range, and the DDUs within the coverage range may include a DDU connected to a candidate AP of the UE, a DDU connected to the current serving AP of the UE, or all DDUs that may be connected to the CCU.

DDU establishes an air interface protocol stack in advance based on the configuration, including a packet data convergence protocol (PDCP) and a radio link control (RLC). At this time, the air interface protocol stack under DDU is not valid, and multiple DDUs establish air interface protocol stacks for the same SRB.

In case that the UE moves from the first DDU to the second DDU, the second DDU activates the corresponding pre-established air interface protocol stack, and the second DDU and the AP managed by the second DDU transmit control-plane signaling.

For example, there are three DDUs within the coverage range of the CCU, namely DDU1, DDU2, and DDU3. The UE accesses DDU1, the CCU establishes RRC connection with the UE, and stores information (the information is in a UE context) such as a UE identifier, control plane bearer configuration, and user plane bearer configuration. The CCU transmits the control-plane signaling configuration information of RRC to DDU1, DDU2, and DDU3. After receiving the control-plane signaling configuration information, the DDU1, DDU2, and DDU3 pre-establish an air interface protocol stack for the target SRB of the UE based on the configuration in the information. In case that the UE moves from DDU1 to DDU2, DDU2 activates the pre-established air interface protocol stack and transmits control-plane signaling with the UE.

In the method for control-plane signaling transmission provided in the embodiments of the present application, the air interface protocol stack corresponding to the SRB of the UE is pre-established by the DDUs within the coverage range of the CCU. After the UE moves to the second DDU, the second DDU activates the pre-established air interface protocol stack and transmits control-plane signaling with the UE, which enables that after the UE transferred from the connected DDU, the control-plane signaling is transmitted on the available air interface channel of the UE while efficiently establishing a procedure for control-plane signaling transmission between the UE and DDU, and reduces the delay of control-plane signaling transmission.

In some embodiments, the method further includes:
receiving control-plane signaling configuration information transmitted from a cloud-based control unit (CCU); and
establishing the air interface protocol stack corresponding to the target SRB based on the control-plane signaling configuration information.

In an embodiment, an air interface protocol stack is established as needed after the UE moves from the first DDU to the second DDU. Firstly, the CCU needs to transmit control-plane signaling configuration information to the second DDU. After receiving the control-plane signaling configuration information transmitted from the CCU, the second DDU establishes the air interface protocol stack corresponding to the target SRB based on the control-plane signaling configuration information.

The CCU establishes an RRC connection with UE when the UE accesses a network, and stores a UE context, which includes a UE identifier, control plane bearer configuration, and user plane bearer configuration, etc.

In an embodiment, after the UE moves from the first DDU to the second DDU, the second DDU may request the CCU to obtain the control-plane signaling configuration, and establish and activate the air interface protocol stack corresponding to the SRB.

In another embodiment, in case that the UE moves from the first DDU to the second DDU, and after the CCU determines the AP and DDU currently serving the UE (i.e., the second DDU), the control-plane signaling configuration of the UE is transmitted to the second DDU. After receiving the control-plane signaling configuration, the second DDU establishes and activates the air interface protocol stack corresponding to the SRB, and the second DDU and the AP managed by the second DDU transmit the control-plane signaling.

For example, there are three DDUs within the coverage range of the CCU, namely DDU1, DDU2, and DDU3. The UE accesses DDU1, the CCU establishes RRC connection with the UE, and stores information (the information is in a UE context) such as a UE identifier, control plane bearer configuration, and user plane bearer configuration.

In case that the UE moves from DDU1 to DDU2, a request message may be transmitted to the CCU through DDU2 to obtain the control-plane signaling configuration; or after the CCU determines that the UE moves to DDU2, the CCU actively transmits the control-plane signaling configuration of the UE to DDU2.

After obtaining the control-plane signaling configuration, DDU2 establishes and activates the air interface protocol stack corresponding to the SRB of the UE based on the configuration, and transmits the control-plane signaling with the UE.

In the method for control-plane signaling transmission provided in the embodiments of the present application, an air interface protocol stack corresponding to the SRB of the UE is established as needed by the second DDU after the UE moves to the second DDU, the second DDU activates the air interface protocol stack and transmits control-plane signaling with the UE, which allows continuous transmission of control-plane signaling without re-establishing the SRB in case that the UE transfers DDU, establishes and activates the air interface protocol stack corresponding to the SRB of the UE more flexibly, and reduces signaling interaction between CCU and DDU.

In some embodiments, before receiving the control-plane signaling configuration information transmitted from the CCU, the method further includes:
transmitting first information to the CCU, where the first information is used to request for the control-plane signaling configuration information.

In an embodiment, after the UE moves from the first DDU to the second DDU, and in case of establishing an air interface protocol stack as needed, the second DDU may transmit the first information to the CCU, which is used to request for control-plane signaling configuration information. After receiving the first information, the CCU transmits the control-plane signaling configuration information to the second DDU.

The CCU may use the following method to determine that the UE is connected to the second DDU: the first DDU transmits a path change notification to the CCU; or
the second DDU transmits a path change notification to the CCU; or
the CCU participates in the AP change and directly determines the connection between the second DDU and UE.

For example, in case that the UE moves from DDU1 to DDU2, DDU2 transmits the first message to CCU, and the CCU receives the first message and transmits the control-plane signaling configuration information to DDU2 based on the request information carried in the first message. DDU2 receives the control-plane signaling configuration information.

In some embodiments, the method further includes:
receiving a transmission state report of the target SRB transmitted from the first DDU, where the first DDU is a DDU providing service to the terminal before the terminal moves to the service range of the second DDU.

In some embodiments, the method further includes:
receiving a transmission state report of the target SRB transmitted from a cloud-based control unit (CCU).

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In an embodiment, the transmission state report of the target SRB received by the second DDU may be transmitted from the first DDU or the CCU. The transmission state report of the target SRB may include one or more pieces of the following information: a sequence number allocated for a next PDCP SDU; a count value allocated for a next PDCP SDU; a sequence number of a PDCP SDU containing downlink control-plane signaling not successfully transmitted from the first DDU; or a sequence number of a PDCP PDU containing uplink control-plane signaling not successfully received by the first DDU.

For example, DDU2 receives a transmission state report of the target SRB transmitted from DDU1 or the CCU, and the transmission state report includes the sequence number allocated for the next PDCP SDU and the count value allocated for the next PDCP SDU. Continuous transmission of control-plane signaling is performed with the UE based on the sequence number and count value for the PDCP SDU.

In the method for control-plane signaling transmission provided in the embodiments of the present application, the transmission state report of the target SRB transmitted from the first DDU or the CCU may be flexibly received as needed, and the transmission state report of the target SRB may contain various state information, which improves the efficiency and accuracy of message retransmission based on the state report in the future.

In some embodiments, the method further includes:
receiving a first packet data convergence protocol (PDCP) service data unit (SDU) transmitted from a cloud-based control unit (CCU); and
allocating a sequence number for the first PDCP SDU based on a transmission state report of the target SRB, where the sequence number allocated for the first PDCP SDU is equal to a sequence number allocated for a next PDCP SDU as indicated in the transmission state report of the target SRB.

Or, the method further includes:
receiving a packet data convergence protocol (PDCP) service data unit (SDU), containing downlink control-plane signaling not successfully received by the first DDU, transmitted from a cloud-based control unit (CCU).

Or, the method further includes:
receiving a packet data convergence protocol (PDCP) service data unit (SDU) containing uplink control-plane signaling not successfully received by the first DDU transmitted from the terminal.

Or, the method further includes:
receiving, from the first DDU, a packet data convergence protocol (PDCP) service data unit (SDU) containing downlink control-plane signaling not successfully transmitted from the first DDU; and
re-transmitting, to the terminal, based on a transmission state report of the target SRB, the PDCP SDU containing downlink control-plane signaling not successfully transmitted from the first DDU, where a sequence number of the PDCP SDU, containing downlink control-plane signaling not successfully transmitted from the first DDU, re-transmitted to the terminal is equal to a sequence number of the PDCP SDU containing the downlink control-plane signaling not successfully transmitted from the first DDU as indicated in the transmission state report of the target SRB.

Or, the method further includes:
receiving a radio resource control (RRC) protocol data unit (PDU), containing control-plane signaling, transmitted from the first DDU and an RRC PDU, containing control-plane signaling, transmitted from the terminal, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the terminal.

Or, the method further includes:
receiving a radio resource control (RRC) protocol data unit (PDU), containing control-plane signaling, transmitted from the terminal, where the RRC PDU containing control-plane signaling is allocated a sequence number by a cloud-based control unit (CCU), and RRC PDUs corresponding to different SRBs are ordered separately; and
transmitting the RRC PDU containing control-plane signaling to the CCU, where the RRC PDU containing control-plane signaling is used for duplicate detection by the CCU.

Or, the method further includes:
receiving a radio resource control (RRC) protocol data unit (PDU), containing control-plane signaling, transmitted from a cloud-based control unit (CCU), where the RRC PDU containing control-plane signaling is allocated a sequence number by the CCU, and RRC PDUs corresponding to different SRBs are ordered separately; and
transmitting the RRC PDU containing control-plane signaling to the terminal, where the RRC PDU containing control-plane signaling is used for duplicate detection by the terminal.

In an embodiment, in case that the UE moves from the service range of the first DDU to the service range of the second DDU, the CCU transmits a PDCP SDU to the second DDU, and the second DDU receives the first PDCP SDU transmitted from the CCU and allocates a sequence number to the first PDCP SDU based on the indication in the transmission state report of the target SRB. The sequence number is equal to the sequence number allocated for the next PDCP SDU.

For example, in case that the UE moves from the service range of DDU1 to the service range of DDU2, the CCU transmits a PDCP SDU to DDU2, and DDU2 receives the first PDCP SDU transmitted from the CCU, which is PDCP SDU1. DDU2 allocates a sequence number SN1 to PDCP SDU1 based on the transmission state report of the target SRB, where SN1 is also equal to the sequence number allocated for the next PDCP SDU.

In an embodiment, in case that the UE moves from the service range of the first DDU to the service range of the second DDU, the CCU transmits a PDCP SDU containing downlink control-plane signaling not successfully received by the first DDU to the second DDU, and the second DDU receives the PDCP SDU containing downlink control-plane signaling not successfully received by the first DDU.

For example, the CCU transmits a PDCP SDU for downlink control-plane signaling to DDU1 before the UE moves from DDU1 to DDU2. The UE moves into the coverage range of DDU2 before DDU1 receives the PDCP SDU, causing DDU1 to no longer receive the PDCP SDU transmitted from the CCU. Instead, the CCU transmits the PDCP SDU to DDU2, and the DDU2 receives the PDCP SDU. DDU2 then transmits the PDCP SDU for downlink control-plane signaling not successfully received by DDU1 to the UE.

In an embodiment, the UE receives a transmission state report of the target SRB, and obtains PDCP PDU, containing uplink control-plane signaling, not successfully received by the first DDU through the transmission state report. The UE retransmits the PDCP PDU, containing uplink control-plane signaling, not successfully received by the first DDU to the second DDU. The second DDU receives the PDCP PDU.

For example, the UE transmits a PDCP PDU for uplink control-plane signaling to DDU1 before the UE moves from DDU1 to DDU2. The UE moves to the coverage range of DDU2 before DDU1 receives the PDCP PDU, causing DDU1 to no longer receive the PDCP PDU transmitted from the UE. Instead, the UE retransmits the PDCP PDU to DDU2, and DDU2 receives the PDCP PDU.

In an embodiment, the first DDU also transmits a PDCP SDU containing the downlink control-plane signaling not successfully transmitted from the first DDU to the second DDU. The second DDU receives the PDCP SDU containing the downlink control-plane signaling not successfully transmitted from the first DDU, re-transmits the PDCP SDU containing the downlink control-plane signaling not successfully transmitted from the first DDU to the UE based on the transmission state report of the target SRB, and re-transmits the sequence number of the PDCP SDU containing the downlink control-plane signaling not successfully transmitted from the first DDU to the UE. The UE receives, from the second DDU, the PDCP SDU containing the downlink control-plane signaling not successfully transmitted from the first DDU.

For example, the sequential and lossless transmission of control-plane signaling is ensured by allocating a sequence number for PDCP SDU, which may be implemented through the following manner.

The UE moves from DDU1 to DDU2, and DDU1 may be notified through CCU or confirm through information exchange with DDU2 that the DDU connected to the UE transfers. DDU1 transmits the PDCP SN transmission state for the downlink SRB, such as the SN or count value allocated for the next PDCP SDU. DDU1 also notifies DDU2 of a received state of the PDCP SN for the uplink SRB, and the received state is the uplink PDCP state report, containing indication of PDCP PDU not correctly received in the uplink.

DDU2 allocates PDCP SN to the next PDCP SDU for SRB in the downlink based on the PDCP SN transmission state indicated by DDU1, and may indicate the UE to retransmit the PDCP PDU not successfully transmitted in the uplink.

In case that the CCU determines the transfer of DDU, the CCU submits, to DDU2, RRC signaling not submitted to DDU1 through a new path. DDU1 may transmit, to DDU2, through the DDU interface, the PDCP SDU (i.e., the RRC PDU) containing downlink RRC signaling not successfully transmitted and the PDCP SN thereof, and DDU2 may continue to transmit the PDCP SDU.

In an embodiment, the CCU allocates a sequence number to the RRC PDU containing control-plane signaling, where RRC PDUs corresponding to different SRBs are ordered separately.

The first DDU transmits an RRC PDU containing control-plane signaling to the second DDU, and the UE transmits an RRC PDU containing control-plane signaling to the second DDU. The second DDU receives, respectively, the RRC PDU, containing control-plane signaling, transmitted from the first DDU and the RRC PDU, containing control-plane signaling, transmitted from the UE, and performs duplicate detection on the RRC PDU transmitted from the first DDU and the RRC PDU transmitted from the UE.

In an embodiment, the second DDU may also transmit the RRC PDU containing control-plane signaling to the CCU for duplicate detection by the CCU.

In an embodiment, the CCU transmits an RRC PDU containing control-plane signaling to the second DDU, and then the second DDU receives the RRC PDU containing control-plane signaling and transmits the RRC PDU containing control-plane signaling to the UE. The UE performs duplicate detection on the RRC PDU containing control-plane signaling after the UE receives the RRC PDU containing control-plane signaling.

For example, the sequential and lossless transmission of control signaling is ensured by adding a sequence number to the SRB, which may be implemented through the following manner.

The RRC layer adds a sequence number (SN) for the SRB, and the PDCPs of different DDUs work separately. In this way, it is no longer required for the PDCP SNs carrying the SRB to be continuous and the PDCP PDU not lost.

The continuity of RRC signaling is ensured through RRC SN ordering, where different SRBs, such as SRB1 and SRB2, are separately ordered.

In case that the UE moves from DDU1 to DDU2, the CCU may transmit the same RRC signaling, such as having the same RRC SN for different SRBs, to DDU1 and DDU2. DDU1 and DDU2 then issue the RRC PDU to the UE for duplicate detection by the UE.

Or, DDU1 and DDU2 may submit the received PDCP SDUs (i.e., RRC PDUs) to the CCU for duplicate detection by the CCU.

Or, DDU1 may submit the received uplink RRC signaling to DDU2 through the interface between DDUs, and DDU2 may perform RRC PDU duplicate detection.

In the method for control-plane signaling transmission provided in the embodiments of the present application, by allocating a sequence number to the PDCP SDU, the continuity of control-plane signaling is ensured based on the continuity of PDCP SNs, and the control-plane signaling that not successfully transmitted is retransmitted; it is also possible to add a sequence number to the SRB through the CCU in RRC layer, which ensures the continuity of control-plane signaling based on the continuity of RRC SN, and the continuity or loss of control-plane signaling is further detected through duplicate detection, which achieves the sequential and lossless transmission of the control-plane signaling.

Below are examples to further illustrate the methods for information transmission provided in the above embodiments.

### Example 1

FIG. 2 is a first signaling interaction diagram of an example scenario of a method for control-plane signaling transmission according to an embodiment of the present application. As shown in FIG. 2, by pre-establishing an air interface protocol stack corresponding to SRB in DDU, activating the air interface protocol stack as needed, and allocating a sequence number for the PDCP SDU, the control-plane signaling between DDUs is continuously transmitted. The steps are as follows.

Step 1: UE establishes RRC connection with a CCU, and the CCU stores a UE context, including a UE identifier, control plane bearer configuration, and user plane bearer configuration, etc.

Step 2: the CCU submits SRB configuration to DDUs within the coverage range, which may include a DDU connected to a candidate AP of the UE, a DDU connected to the current serving AP of the UE, or all DDUs that may be connected to the CCU.

DDU1 is connected to the UE, that is, the serving AP of the UE is associated with DDU1. DDU1 establishes and activates the air interface protocol stack corresponding to the SRB of the UE based on the control-plane signaling configuration information notified by the CCU.

DDU2 pre-establishes the air interface protocol stack corresponding to the SRB of the UE based on the control-plane signaling configuration information notified by the CCU.

Step 3: the UE performs AP selection, and in case that the serving AP changes from an AP connected to DDU1 to an AP connected to DDU2, DDU2 activates the air interface protocol stack corresponding to the SRB of the UE.

Step 4: DDU1 determines, through a notification from the CCU, or through information exchanged between DDU2 and DDU1, that the DDU connected to the UE transfers, and DDU1 interacts with DDU2 on the PDCP state of SRB.

In the downlink direction, DDU1 notifies DDU2 of the PDCP SN transmission state of the downlink SRB, such as the SN or count value allocated by DDU2 for the next PDCP SDU corresponding to the SRB. In an embodiment, DDU1 may also transmit, to DDU2, through the DDU interface, the PDCP SDU (i.e., the RRC PDU) containing downlink RRC signaling not successfully transmitted and the PDCP SN thereof.

DDU2 allocates a PDCP SN to the first arrived PDCP SDU of the SRB based on the PDCP transmission state indication transmitted from DDU1; and/or, based on the PDCP SN notified by DDU1, the PDCP SDU not successfully transmitted, forwarded by DDU1, is continued to be transmitted on the air interface transmission channel between AP2 and UE.

In the uplink direction, DDU1 notifies DDU2 of the received state of the PDCP SN of the uplink SRB, i.e., the uplink PDCP state report, which includes the PDCP SN indication of the uplink PDCP PDU not correctly received. DDU2 schedules the UE to retransmit the uplink PDCP PDU not successfully transmitted on DDU1.

In the method for control-plane signaling transmission provided in the embodiments of the present application, by pre-establishing the air interface protocol stack corresponding to the SRB of the UE through DDUs within the coverage range of CCU, after the UE moves from the coverage range of DDU1 to the coverage range of DDU2, DDU2 activates the pre-established air interface protocol stack and allocates a sequence number to the PDCP SDU to ensure the continuity of the control-plane signaling based on the continuity of PDCP SN, which allows continuous and reliable transmission of control-plane signaling, and reduces the delay of control-plane signaling transmission.

### Example 2

In Example 1, the PDCP SN allocated by DDU2 to the next PDCP SDU of SRB is used to indicate the UE to retransmit the PDCP PDU not successfully transmitted, as well as to continue transmitting the RRC PDU and PDCP SN, transmitted from DDU1, not successfully transmitted, which allows the sequential and lossless transmission of control-plane signaling in case that the UE moves from DDU1 to DDU2. In this example, the sequence number is added to the SRB through CCU and duplicate detection is used to ensure the continuity of RRC signaling.

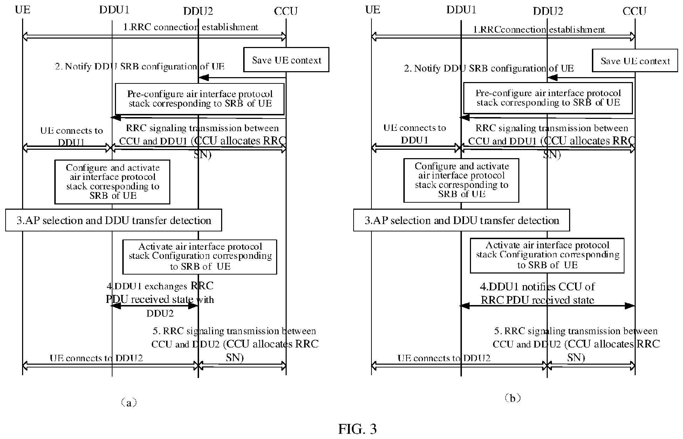

FIG. 3 is a second signaling interaction diagram of an example scenario of a method for control-plane signaling transmission according to an embodiment of the present application. As shown in FIG. 3, an air interface protocol stack corresponding to SRB is pre-established in DDU and is activated as needed, and a sequence number is added to the SRB through CCU in the RRC layer. The continuity of control-plane signaling is ensured based on the continuity of RRC SN, and the control-plane signaling is continuously transmitted between DDUs. The steps are as follows.

Step 1: UE establishes RRC connection with a CCU, and the CCU stores a UE context, including a UE identifier, control plane bearer configuration, and user plane bearer configuration, etc.

Step 2: the CCU submits SRB configuration to DDUs within the coverage range, which may include a DDU connected to a candidate AP of the UE, a DDU connected to the current serving AP of the UE, or all DDUs that may be connected to the CCU. CCU and DDU serving UE transmit RRC signaling, where RRC signaling carries a sequence number (SN), and the RRC SN is continuously allocated by the CCU based on the sequence of RRC signaling generation and transmission.

DDU1 is connected to the UE, that is, the serving AP of the UE is associated with DDU1. DDU1 establishes and activates the air interface protocol stack corresponding to the SRB of the UE based on the control-plane signaling configuration information notified by the CCU.

DDU2 pre-establishes the air interface protocol stack corresponding to the SRB of the UE based on the control-plane signaling configuration information notified by the CCU.

Step 3: the UE performs AP selection, and in case that the serving AP changes from an AP connected to DDU1 to an AP connected to DDU2, DDU2 activates the air interface protocol stack corresponding to the SRB of the UE.

Step 4: in case that DDU1 determines, through a notification from the CCU, or through information exchanged between DDU2 and DDU1, that the DDU connected to the UE transfers:
RRC signaling transmission with UE is stopped;
or, as shown in (a) of FIG. 3, the RRC signaling transmission between the UE and DDU1 is stopped, and the RRC PDU received state is exchanged with DDU2. The downlink RRC PDU received state refers to the RRC SN of the RRC PDU not correctly transmitted, and in an embodiment, the RRC PDU not successfully transmitted is transmitted to DDU2 through the DDU interface; the uplink RRC PDU received state refers to the RRC SN of the uplink RRC PDU not successfully received. DDU2 schedules, based on the uplink RRC PDU received state, the UE to transmit RRC PDU not successfully received by DDU1 on the channel between DDU2 and the UE;
or, as shown in (b) of FIG. 3, the RRC signaling transmission between the UE and DDU1 is stopped, and the RRC PDU received state is exchanged with the CCU. The downlink RRC PDU received state refers to the RRC SN of the RRC PDU not correctly transmitted. The CCU retransmits, based on the downlink RRC PDU received state, the RRC PDU to the DDU2, and the DDU2 transmits the RRC PDU to the UE. The uplink RRC PDU state refers to the RRC SN of the RRC PDU not successfully received. In case that the UE is connected to DDU2, the UE transmits the uplink RRC PDU not successfully received by DDU1 to DDU2.

Step 5: the UE establishes a transmission channel with DDU2, and RRC signaling is transmitted between the CCU and DDU2. In case that the UE moves from DDU1 to DDU2, the CCU may transmit the same RRC signaling, such as having the same RRC SN for different SRBs, to DDU1 and DDU2. DDU1 and DDU2 then issue the RRC PDU to the UE for duplicate detection.

Uplink direction: DDU1 and DDU2 submit the received PDCP SDU (i.e., the RRC PDU) to the CCU for duplicate detection; or DDU1 and DDU2 may submit the received PDCP SDU (i.e., the RRC PDU) to CCU for duplicate detection; or DDU1 may submit the received uplink RRC signaling to DDU2 through the interface between DDUs, and DDU2 may perform RRC PDU duplicate detection.

In the method for control-plane signaling transmission provided in the embodiments of the present application, by pre-establishing the air interface protocol stack corresponding to the SRB of the UE through DDUs within the coverage range of CCU, after the UE moves from the coverage range of DDU1 to the coverage range of DDU2, DDU2 activates the pre-established air interface protocol stack. The CCU in the RRC layer adds a sequence number to the SRB to ensure the continuity of control-plane signaling based on the continuity of RRC SN, and the continuity or loss of control-plane signaling is further detected through duplicate detection, which allows continuous and reliable transmission of control-plane signaling, and reduces the delay of control-plane signaling transmission.

### Example 3

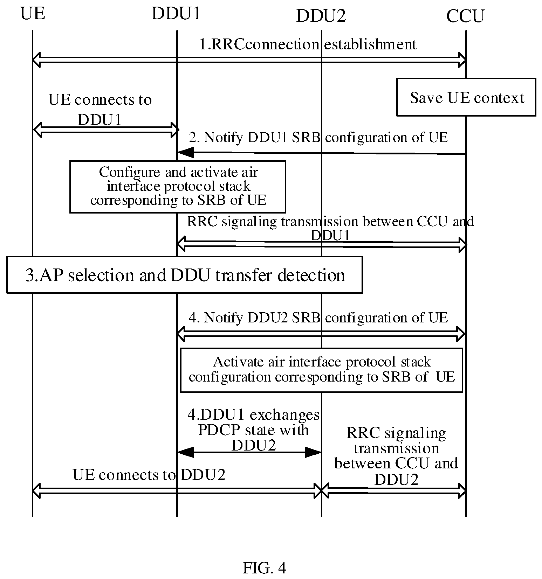

FIG. 4 is FIG. 4 is a third signaling interaction diagram of an example scenario of a method for control-plane signaling transmission according to an embodiment of the present application. As shown in FIG. 4, an air interface protocol stack corresponding to SRB is established in the DDU as needed, the air interface protocol stack is activated, and a sequence number is added to the SRB through CCU in the RRC layer. The continuity of control-plane signaling is ensured based on the continuity of RRC SN, and the control-plane signaling between DDUs is continuously transmitted. The steps are as follows.

Step 1: UE establishes RRC connection with a CCU, and the CCU stores a UE context, including a UE identifier, control plane bearer configuration, and user plane bearer configuration, etc.

Step 2: the UE connects to DDU1, the CCU submits SRB configuration to DDU1, and DDU1 configures and activates the air interface protocol stack corresponding to the SRB of the UE, where the RRC signaling is transmitted between the CCU and DDU1.

Step 3: the UE performs AP selection, and the serving AP changes from an AP connected to DDU1 to an AP connected to DDU2.

Step 4: CCU determines that the UE is connected to DDU2, notifies DDU2 of the control-plane signaling configuration information of the UE, and DDU2 configures and activates the air interface protocol stack corresponding to the SRB of the UE. The CCU may use one of the following methods to determine the UE is connected to DDU2: DDU1 transmits a path change notification to CCU; or DDU2 transmits a path change notification to CCU, or the CCU participates in AP change and directly determines the connection between DDU2 and UE.

Step 5: DDU1 and DDU2 exchange the PDCP state. DDU1 notifies DDU2 of the PDCP SN transmission state of the downlink SRB (such the SN or count value allocated by DDU2 for the next PDCP SDU as indication) and the received state of the PDCP SN of the uplink SRB (i.e., the uplink PDCP state report, including indication of PDCP PDUs not correctly received in the uplink); DDU2 allocates a PDCP SN to the next PDCP SDU of SRB in the downlink based on the PDCP SN transmission state indicated by DDU1, and may indicate UE to retransmit the PDCP PDU not successfully transmitted in the uplink. The CCU may submit, to DDU2, RRC signaling not submitted to DDU1 through a new path when determining DDU transfer. DDU1 may transmit, to DDU2, through the DDU interface, the PDCP SDU (i.e., the RRC PDU) containing downlink RRC signaling and the PDCP SN not successfully transmitted, and DDU2 may continue to transmit the PDCP SDU.

In the method for control-plane signaling transmission provided in the embodiments of the present application, by establishing and activating the air interface protocol stack corresponding to the SRB of the UE as needed after the UE moves from the coverage range of DDU1 to the coverage range of DDU2, and by allocating a sequence number for the PDCP SDU, the continuity of control-plane signaling is ensured based on the continuity of PDCP SN, which allows continuous and reliable transmission of control-plane signaling, and reduces the delay of control-plane signaling transmission.

### Example 4

In Example 3, the PDCP SN allocated by DDU2 to the next PDCP SDU of SRB is used to indicate the UE to retransmit the PDCP PDU not successfully transmitted, as well as to continue transmitting the RRC PDU and PDCP SN, transmitted from DDU1, not successfully transmitted, which allows the sequential and lossless transmission of control-plane signaling in case that the UE moves from DDU1 to DDU2. In this example, the sequence number is added to the SRB through CCU and duplicate detection is used to ensure the continuity of RRC signaling.

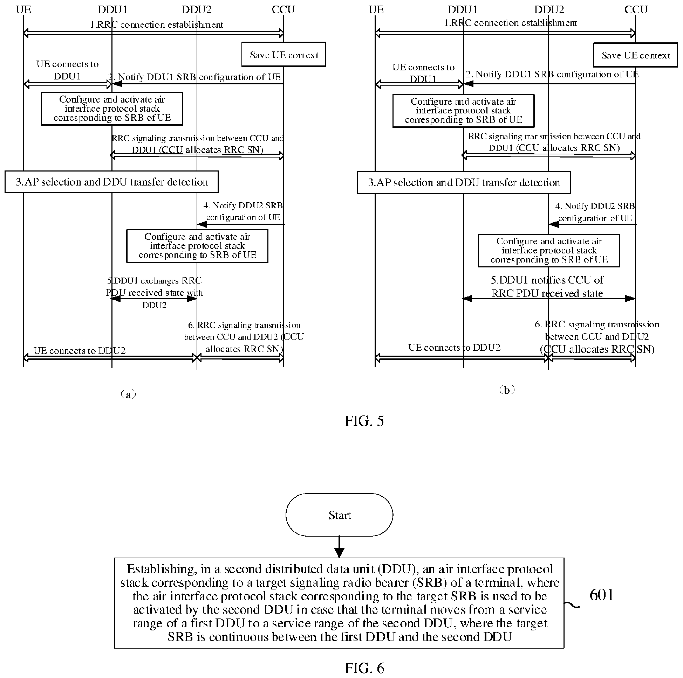

FIG. 5 is a fourth signaling interaction diagram of an example scenario of a method for control-plane signaling transmission according to an embodiment of the present application. As shown in FIG. 5, in another scenario where the DDU pre-establishes an air interface protocol stack corresponding to SRB and activates the air interface protocol stack as needed, the control-plane signaling between DDUs is continuously transmitted. The steps are as follows.

Step 1: UE establishes RRC connection with a CCU, and the CCU stores a UE context, including a UE identifier, control plane bearer configuration, and user plane bearer configuration, etc.

Step 2: UE the connects to DDU1, the CCU submits SRB configuration to DDU1, and DDU1 configures and activates the air interface protocol stack corresponding to the SRB of the UE; RRC signaling is transmitted between CCU and DDU1, where RRC signaling carries a RRC SN, which is continuously allocated by the CCU based on the sequence of RRC signaling generation and transmission.

Step 3: the UE performs AP selection, and the serving AP changes from an AP connected to DDU1 to an AP connected to DDU2.

Step 4: CCU determines that the UE is connected to DDU2, notifies DDU2 of the control-plane signaling configuration information of the UE, and DDU2 configures and activates the air interface protocol stack corresponding to the SRB of the UE. The CCU may use one of the following methods to determine the UE is connected to DDU2: DDU1 transmits a path change notification to CCU; or DDU2 transmits a path change notification to CCU, or the CCU participates in AP change and directly determines the connection between DDU2 and UE.

Step 5: in an embodiment, in case that DDU1 determines that the DDU connected to the UE transfers, one of the following operations is performed:
RRC signaling transmission with UE is stopped;
or, as shown in (a) of FIG. 5, the RRC signaling transmission between the UE and DDU1 is stopped, and the RRC PDU received state is exchanged with DDU2. The downlink RRC PDU received state refers to the RRC SN of the RRC PDU not correctly transmitted. In an embodiment, the RRC PDU not successfully transmitted is transmitted to DDU2 through the DDU interface; the uplink RRC PDU received state refers to the RRC SN of the uplink RRC PDU not successfully received. DDU2 schedules, based on the uplink RRC PDU received state, the UE to transmit RRC PDUs not successfully received by DDU1 on the channel between DDU2 and the UE;
or, as shown in (b) of FIG. 5, the RRC signaling transmission between the UE and DDU1 is stopped, and the RRC PDU received state is exchanged with the CCU. The downlink RRC PDU received state refers to the RRC SN of the RRC PDU not correctly transmitted. The uplink RRC PDU state refers to the RRC SN of the RRC PDU not successfully received. In case that the UE is connected to DDU2, the UE transmits the uplink RRC PDU not, reportedly, successfully received by DDU1 to DDU2.

Step 6: the UE establishes a transmission channel with DDU2, and RRC signaling is transmitted between the CCU and DDU2. In case that the UE moves from DDU1 to DDU2, the CCU may transmit the same RRC signaling, such as having the same RRC SN for different SRBs, to DDU1 and DDU2. DDU1 and DDU2 then issue the RRC PDU to the UE for duplicate detection. Uplink direction: DDU1 and DDU2 submit the received PDCP SDU (i.e., the RRC PDU) to the CCU for duplicate detection; or DDU1 and DDU2 may submit the received PDCP SDU (i.e., the RRC PDU) to CCU for duplicate detection; or DDU1 may submit the received uplink RRC signaling to DDU2 through the interface between DDUs, and DDU2 may perform RRC PDU duplicate detection.

In the method for control-plane signaling transmission provided in the embodiments of the present application, the air interface protocol stack corresponding to the SRB of the UE is established and activated as needed after the UE moves from the coverage range of DDU1 to the coverage range of DDU2. The CCU in the RRC layer adds a sequence number to the SRB to ensure the continuity of control-plane signaling based on the continuity of RRC SN. The continuity or loss of control-plane signaling is further detected through duplicate detection, which allows continuous and reliable transmission of control-plane signaling, and reduces the delay of control-plane signaling transmission.

FIG. 6 is a second schematic flowchart of a method for control-plane signaling transmission according to an embodiment of the present application. As shown in FIG. 6, embodiments of the present application provide a method for control-plane signaling transmission, which may be performed by a CCU. The method includes the following:
step 601: establishing, in a second distributed data unit (DDU), an air interface protocol stack corresponding to a target signaling radio bearer (SRB) of a terminal, where the air interface protocol stack corresponding to the target SRB is used to be activated by the second DDU in case that the terminal moves from a service range of a first DDU to a service range of the second DDU, where the target SRB is continuous between the first DDU and the second DDU.

In some embodiments, establishing the air interface protocol stack corresponding to the target SRB of the terminal in the second DDU includes:
transmitting control-plane signaling configuration information to a DDU within a coverage range before the terminal moves from the service range of the first DDU to the service range of the second DDU, where the DDU within the coverage range includes the second DDU, and the control-plane signaling configuration information is used for the second DDU to establish the air interface protocol stack corresponding to the target SRB of the terminal.

In some embodiments, establishing the air interface protocol stack corresponding to the target SRB of the terminal in the second DDU includes:
transmitting control-plane signaling configuration information to the second DDU in case that the terminal moves from the service range of the first DDU to the service range of the second DDU, where the control-plane signaling configuration information is used for the second DDU to establish the air interface protocol stack corresponding to the target SRB of the terminal.

In some embodiments, before transmitting the control-plane signaling configuration information to the second DDU, the method further includes:
receiving first information transmitted from the second DDU, where the first information is used to request for the control-plane signaling configuration information.

In some embodiments, the method further includes:
transmitting a transmission state report of the target SRB to the second DDU in case that the terminal moves from the service range of the first DDU to the service range of the second DDU.

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the method further includes:
transmitting a first packet data convergence protocol (PDCP) service data unit (SDU) to the second DDU in case that the terminal moves from the service range of the first DDU to the service range of the second DDU, where the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB.

Or, the method further includes:
transmitting a packet data convergence protocol (PDCP) service data unit (SDU) containing downlink control-plane signaling not successfully received by the first DDU to the second DDU in case that the terminal moves from the service range of the first DDU to the service range of the second DDU.

In some embodiments, the method further includes:
receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, where the RRC PDU containing control-plane signaling is allocated a sequence number by the CCU, and RRC PDUs corresponding to different SRBs are ordered separately; and
performing duplicate detection on the RRC PDU, containing control-plane signaling, transmitted from the first DDU and the RRC PDU, containing control-plane signaling, transmitted from the second DDU.

In some embodiments, the method further includes:
transmitting a radio resource control (RRC) protocol data unit (PDU) containing control-plane signaling to the second DDU in case that the terminal moves from the service range of the first DDU to the service range of the second DDU, where the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

In some embodiments, the method further includes:
allocating a sequence number for the RRC PDU containing control-plane signaling, where RRC PDUs corresponding to different SRBs are ordered separately.

In an embodiment, the method for control-plane signaling transmission provided in the embodiments of the present application may refer to the method for control-plane signaling transmission embodiment with the second DDU as the performing entity, and may achieve the same technical effect. Therefore, the same parts and beneficial effects as the corresponding method embodiments in this embodiment are not repeated here.

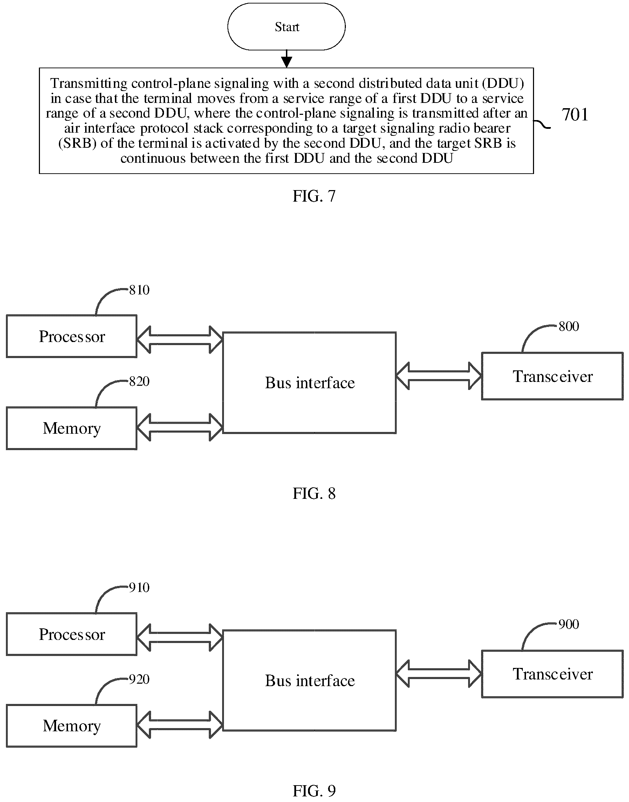

FIG. 7 is a third schematic flowchart of a method for control-plane signaling transmission according to an embodiment of the present application. As shown in FIG. 7, embodiments of the present application provide a method for control-plane signaling transmission, which may be performed by a terminal, such as a mobile phone, etc. The method includes the following:
step 701: transmitting control-plane signaling with a second distributed data unit (DDU) in case that the terminal moves from a service range of a first DDU to a service range of a second DDU, where the control-plane signaling is transmitted after an configure is activated by the second DDU, and the target SRB is continuous between the first DDU and the second DDU.

In some embodiments, transmitting control-plane signaling with the second DDU includes:
receiving a transmission state report of the target SRB, where the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, transmitting control-plane signaling with the second DDU includes:
   receiving a packet data convergence protocol (PDCP) protocol data unit (PDU), not successfully transmitted from the first DDU, containing downlink control-plane signaling, transmitted from the second DDU.

In some embodiments, the method further includes:
receiving a radio resource control (RRC) protocol data unit (PDU), containing control-plane signaling, transmitted from the first DDU and an RRC PDU, containing control-plane signaling, transmitted from the second DDU, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the second DDU.

In an embodiment, the method for control-plane signaling transmission provided in the embodiments of the present application may refer to the method for control-plane signaling transmission embodiment with the second DDU as the performing entity, and may achieve the same technical effect. Therefore, the same parts and beneficial effects as the corresponding method embodiments in this embodiment are not repeated here.

FIG. 8 is a schematic structural diagram of a second distributed data unit (DDU) according to an embodiment of the present application. As shown in FIG. 8, the second DDU includes a memory 820, a transceiver 800, and a processor 810, where
the memory 820 is used for storing a computer program; the transceiver 800 is used for receiving and transmitting data under the control of the processor; and the processor 810 is used for reading the computer program in the memory 820 and performing the following operations:
in case that a terminal moves from a service range of a first DDU to a service range of the second DDU, activating an air interface protocol stack corresponding to a target signaling radio bearer (SRB) of the terminal, where the target SRB is continuous between the first DDU and the second DDU; and
transmitting control-plane signaling with the terminal.

In an embodiment, the transceiver 800 is used for receiving and transmitting data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, which are well known in the art, and therefore will not be further described in the present application. The bus interface provides an interface. The transceiver 800 may be multiple elements, i.e., including a transmitter and a receiver, units for providing communication with various other devices over transmission media including wireless channels, wired channels, fiber optic cables, and the like. The processor 810 is responsible for managing the bus architecture and general processing, and the memory 820 may store data used by the processor 810 when performing operations.

The processor 810 may be a central processing unit (CPU), an application specific integrated circuit (ASIC), a field-programmable gate array (FPGA), or a complex programmable logic device (CPLD), the processor may also use a multi-core architecture.

In some embodiments, before the terminal moves from the service range of the first DDU to the service range of the second DDU, the processor is used for reading the computer program stored in the memory and performing the following operations:
receiving control-plane signaling configuration information transmitted from a cloud-based control unit (CCU); and
establishing the air interface protocol stack corresponding to the target SRB based on the control-plane signaling configuration information.

In some embodiments, the processor is further used for reading the computer program stored in the memory and performing the following operations:
receiving control-plane signaling configuration information transmitted from a cloud-based control unit (CCU); and
establishing the air interface protocol stack corresponding to the target SRB based on the control-plane signaling configuration information.

In some embodiments, before receiving the control-plane signaling configuration information transmitted from the CCU, the processor is further used for reading the computer program stored in the memory and performing the following operations:
transmitting first information to the CCU, where the first information is used to request for the control-plane signaling configuration information.

In some embodiments, the processor is further used for reading the computer program stored in the memory and performing the following operations:
receiving a transmission state report of the target SRB transmitted from the first DDU, where the first DDU is a DDU providing service to the terminal before the terminal moves to the service range of the second DDU.

In some embodiments, the processor is further used for reading the computer program stored in the memory and performing the following operations:
receiving a transmission state report of the target SRB transmitted from a cloud-based control unit (CCU).

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the processor is further used for reading the computer program stored in the memory and performing the following operations:
receiving a first packet data convergence protocol (PDCP) service data unit (SDU) transmitted from a cloud-based control unit (CCU); and
allocating a sequence number for the first PDCP SDU based on a transmission state report of the target SRB, where the sequence number allocated for the first PDCP SDU is equal to a sequence number allocated for a next PDCP SDU as indicated in the transmission state report of the target SRB.

Or, the processor is further used for reading the computer program stored in the memory and performing the following operations:
receiving a packet data convergence protocol (PDCP) service data unit (SDU), containing downlink control-plane signaling not successfully received by the first DDU, transmitted from a cloud-based control unit (CCU).

Or, the processor is further used for reading the computer program stored in the memory and performing the following operations:
receiving a packet data convergence protocol (PDCP) service data unit (PDU), containing uplink control-plane signaling not successfully received by the first DDU, transmitted from the terminal.

Or, the processor is further used for reading the computer program stored in the memory and performing the following operations:
receiving, from the first DDU, a packet data convergence protocol (PDCP) service data unit (SDU) containing downlink control-plane signaling not successfully transmitted from the first DDU; and
re-transmitting, to the terminal, based on a transmission state report of the target SRB, a packet data convergence protocol (PDCP) service data unit (SDU) containing downlink control-plane signaling not successfully transmitted from the first DDU, where a sequence number of the PDCP SDU, containing downlink control-plane signaling not successfully transmitted from the first DDU, re-transmitted to the terminal is equal to a sequence number of the PDCP SDU containing the downlink control-plane signaling not successfully transmitted from the first DDU as indicated in the transmission state report of the target SRB.

Or, the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the terminal, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the terminal.

Or, the processor is further used for reading the computer program stored in the memory and performing the following operations:
receiving a radio resource control (RRC) protocol data unit (PDU), containing control-plane signaling, transmitted from the terminal, where the RRC PDU containing control-plane signaling is allocated a sequence number by a cloud-based control unit (CCU), and RRC PDUs corresponding to different SRBs are ordered separately; and
transmitting the RRC PDU containing control-plane signaling to the CCU, where the RRC PDU containing control-plane signaling is used for duplicate detection by the CCU.

Or, the processor is further used for reading the computer program stored in the memory and performing the following operations:
receiving a radio resource control (RRC) protocol data unit (PDU), containing control-plane signaling, transmitted from a cloud-based control unit (CCU), where the RRC PDU containing control-plane signaling is allocated a sequence number by the CCU, and RRC PDUs corresponding to different SRBs are ordered separately; and
transmitting the RRC PDU containing control-plane signaling to the terminal, where the RRC PDU containing control-plane signaling is used for duplicate detection by the terminal.

In an embodiment, the second DDU provided in the embodiments of the present application may achieve all method steps implemented by the method embodiment with the second DDU as the performing subject, and may achieve the same technical effect. Therefore, the same parts and beneficial effects as the method embodiment in this embodiment are not repeated here.

FIG. 9 is a schematic structural diagram of a cloud-based control unit (CCU) according to an embodiment of the present application. As shown in FIG. 9, the CCU includes a memory 920, a transceiver 900, and a processor 910, where
the memory 920 is used for storing a computer program; the transceiver 900 is used for receiving and transmitting data under the control of the processor; and the processor 910 is used for reading the computer program in the memory 920 and performing the following operations:
establishing, in a second distributed data unit (DDU), an air interface protocol stack corresponding to a target signaling radio bearer (SRB) of a terminal, where the air interface protocol stack corresponding to the target SRB is used to be activated by the second DDU in case that the terminal moves from a service range of a first DDU to a service range of the second DDU, where the target SRB is continuous between the first DDU and the second DDU.

In an embodiment, the transceiver 900 is used for receiving and transmitting data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, which are well known in the art, and therefore will not be further described in the present application. The bus interface provides an interface. The transceiver 900 may be multiple elements, i.e., including a transmitter and a receiver, units for providing communication with various other devices over transmission media including wireless channels, wired channels, fiber optic cables, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), the processor may also use a multi-core architecture.

In some embodiments, the processor is further used for reading the computer program stored in the memory and performing the following operations:
establishing the air interface protocol stack corresponding to the target SRB of the terminal in the second DDU includes:
transmitting control-plane signaling configuration information to a DDU within a coverage range before the terminal moves from the service range of the first DDU to the service range of the second DDU, where the DDU within the coverage range includes the second DDU, and the control-plane signaling configuration information is used for the second DDU to establish the air interface protocol stack corresponding to the target SRB of the terminal.

In some embodiments, the processor is further used for reading the computer program stored in the memory and performing the following operations:
establishing the air interface protocol stack corresponding to the target SRB of the terminal in the second DDU includes:
transmitting control-plane signaling configuration information to the second DDU in case that the terminal moves from the service range of the first DDU to the service range of the second DDU, where the control-plane signaling configuration information is used for the second DDU to establish the air interface protocol stack corresponding to the target SRB of the terminal.

In some embodiments, before transmitting the control-plane signaling configuration information to the second DDU, the processor is further used for reading the computer program stored in the memory and performing the following operations:
receiving first information transmitted from the second DDU, where the first information is used to request for the control-plane signaling configuration information.

In some embodiments, the processor is further used for reading the computer program stored in the memory and performing the following operations:
transmitting a transmission state report of the target SRB to the second DDU in case that the terminal moves from the service range of the first DDU to the service range of the second DDU.

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the processor is further used for reading the computer program stored in the memory and performing the following operations:
transmitting a first packet data convergence protocol (PDCP) service data unit (SDU) to the second DDU in case that the terminal moves from the service range of the first DDU to the service range of the second DDU, where the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB.

Or, the processor is further used for reading the computer program stored in the memory and performing the following operations:
transmitting a packet data convergence protocol (PDCP) service data unit (SDU) containing downlink control-plane signaling not successfully received by the first DDU to the second DDU in case that the terminal moves from the service range of the first DDU to the service range of the second DDU.

In some embodiments, the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, where the RRC PDU containing control-plane signaling is allocated a sequence number by the CCU, and RRC PDUs corresponding to different SRBs are ordered separately; and
performing duplicate detection on the RRC PDU, containing control-plane signaling, transmitted from the first DDU and the RRC PDU, containing control-plane signaling, transmitted from the second DDU.

In some embodiments, the processor is further used for reading the computer program stored in the memory and performing the following operations:
transmitting a radio resource control (RRC) protocol data unit (PDU) containing control-plane signaling to the second DDU in case that the terminal moves from the service range of the first DDU to the service range of the second DDU, where the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

In some embodiments, the processor is further used for reading the computer program stored in the memory and performing the following operations:
allocating a sequence number for the RRC PDU containing control-plane signaling, where RRC PDUs corresponding to different SRBs are ordered separately.

In an embodiment, the CCU provided in the embodiments of the present application may achieve all method steps implemented by the method embodiment with the CCU as the performing subject, and may achieve the same technical effect. Therefore, the same parts and beneficial effects as the method embodiment in this embodiment are not repeated here.

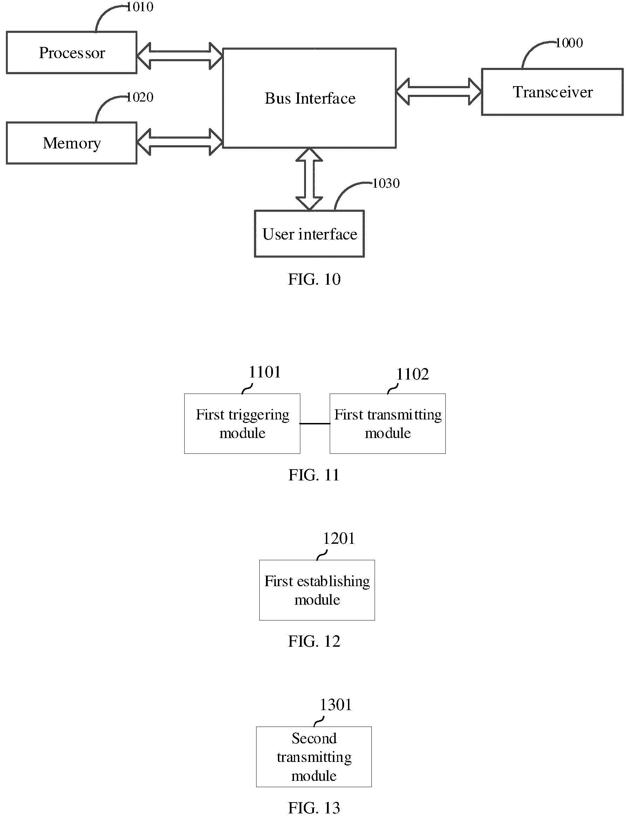

FIG. 10 is a schematic structural diagram of a terminal according to an embodiment of the present application. As shown in FIG. 10, the terminal includes a memory 1020, a transceiver 1000, and a processor 1010, where
the memory 1020 is used for storing a computer program; the transceiver 1000 is used for receiving and transmitting data under the control of the processor; and the processor 1010 is used for reading the computer program in the memory 1020 and performing the following operations:
transmitting control-plane signaling with a second distributed data unit (DDU) in case that the terminal moves from a service range of a first DDU to a service range of a second DDU, where the control-plane signaling is transmitted after an air interface protocol stack corresponding to a target signaling radio bearer (SRB) of the terminal is activated by the second DDU, and the target SRB is continuous between the first DDU and the second DDU.

In an embodiment, the transceiver 1000 is used for receiving and transmitting data under control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, which are well known in the art, and therefore will not be further described in the present application. The bus interface provides an interface. The transceiver 1000 may be multiple elements, i.e., including a transmitter and a receiver, units for providing communication with various other devices over transmission media including wireless channels, wired channels, fiber optic cables, and the like. For different user equipment, the user interface 1030 may also be an interface capable of externally or internally connecting the required equipment, and the connected equipment includes, but not limited to, a keypad, a display, a speaker, a microphone, a joystick, and the like.

The processor 1010 is responsible for managing the bus architecture and general processing, and the memory 1020 may store data used by the processor 1010 when performing operations.

In some embodiments, processor 1010 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on an obtained executable instruction by calling the computer program stored in the memory. The processor and memory may also be physically separated.

In some embodiments, the processor is further used for reading the computer program stored in the memory and performing the following operations:
transmitting control-plane signaling with the second DDU includes:
receiving a transmission state report of the target SRB, where the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, the processor is further used for reading the computer program stored in the memory and performing the following operations:
   transmitting control-plane signaling with the second DDU includes:
   receiving a packet data convergence protocol (PDCP) protocol data unit (PDU), not successfully transmitted from the first DDU, containing downlink control-plane signaling, transmitted from the second DDU.

In some embodiments, the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the second DDU, where the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the second DDU.

It should be noted that the terminal provided in the embodiments of the present application may implement all the method steps implemented by the method embodiment with the terminal as the performing subject, and may achieve the same technical effects. Therefore, the same parts and beneficial effects as the method embodiment in this embodiment are not repeated here.

FIG. 11 is a first schematic structural diagram of an apparatus for control-plane signaling transmission according to an embodiment of the present application. As shown in FIG. 11, the present application provides an apparatus for control-plane signaling transmission, which includes a first activating module 1101 and a second transmitting module 1102, where
the first activating module 1101 is used for in case that a terminal moves from a service range of a first DDU to a service range of the second DDU, activating an air interface protocol stack corresponding to a target signaling radio bearer (SRB) of the terminal, where the target SRB is continuous between the first DDU and the second DDU; and
the first transmitting module 1102 is used for transmitting control-plane signaling with the terminal.

In some embodiments, the apparatus further includes:
a first receiving module, used for receiving control-plane signaling configuration information transmitted from a cloud-based control unit (CCU) before the terminal moves from the service range of the first DDU to the service range of the second DDU; and
a second establishing module, used for establishing the air interface protocol stack corresponding to the target SRB based on the control-plane signaling configuration information before the terminal moves from the service range of the first DDU to the service range of the second DDU.

In some embodiments, the apparatus further includes:
a second receiving module, used for receiving control-plane signaling configuration information transmitted from a cloud-based control unit (CCU); and
a third establishing module, used for establishing the air interface protocol stack corresponding to the target SRB based on the control-plane signaling configuration information.

In some embodiments, the apparatus further includes:
a first transmitting module, used for transmitting first information to the CCU before receiving the control-plane signaling configuration information transmitted from the CCU, where the first information is used to request for the control-plane signaling configuration information.

In some embodiments, the apparatus further includes:
a third receiving module, used for receiving a transmission state report of the target SRB transmitted from the first DDU, where the first DDU is a DDU providing service to the terminal before the terminal moves to the service range of the second DDU.

In some embodiments, the apparatus further includes:
a fourth receiving module, used for receiving a transmission state report of the target SRB transmitted from a cloud-based control unit (CCU).

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the apparatus further includes:
a fifth receiving module, used for receiving a first packet data convergence protocol (PDCP) service data unit (SDU) transmitted from a cloud-based control unit (CCU); and
a first allocating module, used for allocating a sequence number for the first PDCP SDU based on a transmission state report of the target SRB, where the sequence number allocated for the first PDCP SDU is equal to a sequence number allocated for a next PDCP SDU as indicated in the transmission state report of the target SRB.

In some embodiments, the apparatus further includes:
a sixth receiving module, used for receiving a packet data convergence protocol (PDCP) service data unit (SDU), containing downlink control-plane signaling not successfully received by the first DDU, transmitted from a cloud-based control unit (CCU).

In some embodiments, the apparatus further includes:
a seventh receiving module, used for receiving a packet data convergence protocol (PDCP) service data unit (SDU) containing uplink control-plane signaling not successfully received by the first DDU transmitted from the terminal.

In some embodiments, the apparatus further includes:
an eighth receiving module, used for receiving, from the first DDU, a packet data convergence protocol (PDCP) service data unit (SDU) containing downlink control-plane signaling not successfully transmitted from the first DDU; and
a second transmitting module, used for re-transmitting, to the terminal, based on a transmission state report of the target SRB, a packet data convergence protocol (PDCP) service data unit (SDU) containing downlink control-plane signaling not successfully transmitted from the first DDU, where a sequence number of the PDCP SDU, containing downlink control-plane signaling not successfully transmitted from the first DDU, re-transmitted to the terminal is equal to a sequence number of the PDCP SDU containing the downlink control-plane signaling not successfully transmitted from the first DDU as indicated in the transmission state report of the target SRB.

In some embodiments, the apparatus further includes:
a ninth receiving module, used for receiving a radio resource control (RRC) protocol data unit (PDU), containing control-plane signaling, transmitted from the first DDU and an RRC PDU, containing control-plane signaling, transmitted from the terminal, where the RRC PDU containing control-plane signaling is allocated a sequence number by a cloud-based control unit (CCU), and RRC PDUs corresponding to different SRBs are ordered separately; and
a first detecting module, used for performing duplicate detection on the received RRC PDU, containing control-plane signaling, transmitted from the first DDU and the RRC PDU, containing control-plane signaling, transmitted from the terminal.

In some embodiments, the apparatus further includes:
a tenth receiving module, used for receiving a radio resource control (RRC) protocol data unit (PDU), containing control-plane signaling, transmitted from the terminal, where the RRC PDU containing control-plane signaling is allocated a sequence number by a cloud-based control unit (CCU), and RRC PDUs corresponding to different SRBs are ordered separately; and
a third transmitting module, used for transmitting the RRC PDU containing control-plane signaling to the CCU, where the RRC PDU containing control-plane signaling is used for duplicate detection by the CCU.

In some embodiments, the apparatus further includes:
an eleventh receiving module, used for receiving a radio resource control (RRC) protocol data unit (PDU), containing control-plane signaling, transmitted from a cloud-based control unit (CCU), where the RRC PDU containing control-plane signaling is allocated a sequence number by the CCU, and RRC PDUs corresponding to different SRBs are ordered separately; and
a fourth transmitting module, used for transmitting the RRC PDU containing control-plane signaling to the terminal, where the RRC PDU containing control-plane signaling is used for duplicate detection by the terminal.

In an embodiment, the apparatus for control-plane signaling transmission provided in the embodiments of the present application may achieve all method steps implemented by the method embodiment with the second DDU as the performing subject, and may achieve the same technical effects. Therefore, the same parts and beneficial effects as the method embodiment in this embodiment are not repeated here.

FIG. 12 is a second schematic structural diagram of an apparatus for control-plane signaling transmission according to an embodiment of the present application. As shown in FIG. 12, embodiments of the present application provide an apparatus for control-plane signaling transmission, including a first establishing module 1201, where
the first establishing module 1201 is used for establishing, in a second distributed data unit (DDU), an air interface protocol stack corresponding to a target signaling radio bearer (SRB) of a terminal, where the air interface protocol stack corresponding to the target SRB is used to be activated by the second DDU in case that the terminal moves from a service range of a first DDU to a service range of the second DDU, where the target SRB is continuous between the first DDU and the second DDU.

In some embodiments, the first establishing module is further used for:
transmitting control-plane signaling configuration information to a DDU within a coverage range before the terminal moves from the service range of the first DDU to the service range of the second DDU, where the DDU within the coverage range includes the second DDU, and the control-plane signaling configuration information is used for the second DDU to establish the air interface protocol stack corresponding to the target SRB of the terminal.

In some embodiments, the first establishing module is further used for:
transmitting control-plane signaling configuration information to the second DDU in case that the terminal moves from the service range of the first DDU to the service range of the second DDU, where the control-plane signaling configuration information is used for the second DDU to establish the air interface protocol stack corresponding to the target SRB of the terminal.

In some embodiments, the apparatus further includes:
a twelfth receiving module, used for receiving first information transmitted from the second DDU before transmitting control-plane signaling configuration information to the second DDU, where the first information is used to request for the control-plane signaling configuration information.

In some embodiments, the apparatus further includes:
a fifth transmitting module, used for transmitting a transmission state report of the target SRB to the second DDU in case that the terminal moves from the service range of the first DDU to the service range of the second DDU.

In some embodiments, the transmission state report of the target SRB includes one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

In some embodiments, the apparatus further includes:
a sixth transmitting module, used for transmitting a first packet data convergence protocol (PDCP) service data unit (SDU) to the second DDU in case that the terminal moves from the service range of the first DDU to the service range of the second DDU, where the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;

In some embodiments, the apparatus further includes:
a seventh transmitting module, used for transmitting a packet data convergence protocol (PDCP) service data unit (SDU) containing downlink control-plane signaling not successfully received by the first DDU to the second DDU in case that the terminal moves from the service range of the first DDU to the service range of the second DDU.

In some embodiments, the apparatus further includes:
a thirteenth receiving module, used for receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, where the RRC PDU containing control-plane signaling is allocated a sequence number by the CCU, and RRC PDUs corresponding to different SRBs are ordered separately; and
a second detecting module, used for performing duplicate detection on the RRC PDU, containing control-plane signaling, transmitted from the first DDU and the RRC PDU, containing control-plane signaling, transmitted from the second DDU.

In some embodiments, the apparatus further includes:
an eighth transmitting module, used for transmitting a radio resource control (RRC) protocol data unit (PDU) containing control-plane signaling to the second DDU in case that the terminal moves from the service range of the first DDU to the service range of the second DDU, where the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

In some embodiments, the apparatus further includes:
a second allocating module, used for allocating a sequence number for the RRC PDU containing control-plane signaling, where RRC PDUs corresponding to different SRBs are ordered separately.

In an embodiment, the apparatus for control-plane signaling transmission provided in the embodiments of the present application may achieve all method steps implemented by the method embodiment with the CCU as the performing subject, and may achieve the same technical effects. Therefore, the same parts and beneficial effects as the method embodiment in this embodiment are not repeated here.

FIG. 13 is a third schematic structural diagram of an apparatus for control-plane signaling transmission according to an embodiment of the present application. As shown in FIG. 13, embodiments of the present application provide an apparatus for control-plane signaling transmission, including a second transmitting module 1301, where
the second transmitting module 1301 is used for transmitting control-plane signaling with a second distributed data unit (DDU) in case that the terminal moves from a service range of a first DDU to a service range of a second DDU, where the control-plane signaling is transmitted after an air interface protocol stack corresponding to a target signaling radio bearer (SRB) of the terminal is activated by the second DDU, and the target SRB is continuous between the first DDU and the second DDU.

In some embodiments, the second transmitting module is further used for:
receiving a transmission state report of the target SRB, where the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;

In some embodiments, the second transmitting module is further used for:
receiving a packet data convergence protocol (PDCP) protocol data unit (PDU), not successfully transmitted from the first DDU, containing downlink control-plane signaling, transmitted from the second DDU.

In some embodiments, the apparatus further includes:
a fourteenth receiving module, used for receiving a radio resource control (RRC) protocol data unit (PDU), containing control-plane signaling, transmitted from the first DDU and an RRC PDU, containing control-plane signaling, transmitted from the second DDU, where the RRC PDU containing control-plane signaling is allocated a sequence number by a cloud-based control unit (CCU), and RRC PDUs corresponding to different SRBs are ordered separately; and
a third detecting module, used for performing duplicate detection on the received RRC PDU, containing control-plane signaling, transmitted from the first DDU and the RRC PDU, containing control-plane signaling, transmitted from the second DDU.

In an embodiment, the apparatus for control-plane signaling transmission provided in the embodiments of the present application may achieve all method steps implemented by the method embodiment with the terminal as the performing subject, and may achieve the same technical effects. Therefore, the same parts and beneficial effects as the method embodiment in this embodiment are not repeated here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

In some embodiments, a computer-readable storage medium is also provided, which stores a computer program for causing a computer to perform the method for control-plane signaling transmission provided in the above method embodiments.

In an embodiment, the computer-readable storage medium provided in the embodiments of the present application may implement all the method steps implemented in the above method embodiments and may achieve the same technical effects. Therefore, the same parts and beneficial effects as the method embodiment in this embodiment are not repeated here.

It should be noted that the processor-readable storage medium may be any available medium or data storage device that may be accessed by a processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first" and "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

In addition, the solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CN) via a radio access network (RAN), and the wireless terminal device may be a mobile terminal device, such as a mobile phone (or referred to as "cellular "phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an Internet protocol (IP) communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for control-plane signaling transmission, performed by a second distributed data unit (DDU), comprising:
in case that a terminal moves from a service range of a first DDU to a service range of the second DDU, activating an air interface protocol stack corresponding to a target signaling radio bearer (SRB) of the terminal, wherein the target SRB is continuous between the first DDU and the second DDU; and
transmitting control-plane signaling with the terminal.

2. The method of claim 1, wherein before the terminal moves from the service range of the first DDU to the service range of the second DDU, the method further comprises:
receiving control-plane signaling configuration information transmitted from a cloud-based control unit (CCU); and
establishing the air interface protocol stack corresponding to the target SRB based on the control-plane signaling configuration information.

3. The method of claim 1, further comprising:
receiving control-plane signaling configuration information transmitted from a cloud-based control unit (CCU); and
establishing the air interface protocol stack corresponding to the target SRB based on the control-plane signaling configuration information.

4. The method of claim 3, wherein before receiving the control-plane signaling configuration information transmitted from the CCU, the method further comprises:
transmitting first information to the CCU, wherein the first information is used to request for the control-plane signaling configuration information.

5. The method of claim 1, further comprising:
receiving a transmission state report of the target SRB transmitted from the first DDU, wherein the first DDU is a DDU providing service to the terminal before the terminal moves to the service range of the second DDU.

6. The method of claim 1, further comprising:
receiving a transmission state report of the target SRB transmitted from a cloud-based control unit (CCU).

7. The method of claim 5 or 6, wherein the transmission state report of the target SRB comprises one or more pieces of the following information:
a sequence number allocated for a next packet data convergence protocol (PDCP) service data unit (SDU);
a count value allocated for a next packet data convergence protocol (PDCP) service data unidt (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

8. The method of claim 1, further comprising:
receiving a first packet data convergence protocol (PDCP) service data unit (SDU) transmitted from a cloud-based control unit (CCU); and allocating a sequence number for the first PDCP SDU based on a transmission state report of the target SRB, wherein the sequence number allocated for the first PDCP SDU is equal to a sequence number allocated for a next PDCP SDU as indicated in the transmission state report of the target SRB;
or,
the method further comprises:
receiving a packet data convergence protocol (PDCP) service data unit (SDU), containing downlink control-plane signaling not successfully received by the first DDU, transmitted from a cloud-based control unit (CCU);
or,
the method further comprises:
receiving a packet data convergence protocol (PDCP) service data unit (PDU), containing uplink control-plane signaling not successfully received by the first DDU, transmitted from the terminal;
or,
the method further comprises:
receiving, from the first DDU, a packet data convergence protocol (PDCP) service data unit (SDU) containing downlink control-plane signaling not successfully transmitted from the first DDU; and re-transmitting, to the terminal, based on a transmission state report of the target SRB, a packet data convergence protocol (PDCP) service data unit (SDU) containing downlink control-plane signaling not successfully transmitted from the first DDU, wherein a sequence number of the PDCP SDU, containing downlink control-plane signaling not successfully transmitted from the first DDU, re-transmitted to the terminal is equal to a sequence number of the PDCP SDU containing downlink control-plane signaling not successfully transmitted from the first DDU as indicated in the transmission state report of the target SRB;
or,
the method further comprises:
receiving a radio resource control (RRC) protocol data unit (PDU), containing control-plane signaling, transmitted from the first DDU and an RRC PDU, containing control-plane signaling, transmitted from the terminal, wherein the RRC PDU containing control-plane signaling is allocated a sequence number by a cloud-based control unit (CCU), and RRC PDUs corresponding to different SRBs are ordered separately; and performing duplicate detection on the received RRC PDU, containing control-plane signaling, transmitted from the first DDU and the RRC PDU, containing control-plane signaling, transmitted from the terminal;
or,
the method further comprises:
receiving a radio resource control (RRC) protocol data unit (PDU), containing control-plane signaling, transmitted from the terminal, wherein the RRC PDU containing control-plane signaling is allocated a sequence number by a cloud-based control unit (CCU), and RRC PDUs corresponding to different SRBs are ordered separately; and transmitting the RRC PDU containing control-plane signaling to the CCU, wherein the RRC PDU containing control-plane signaling is used for duplicate detection by the CCU;
or,
the method further comprises:
receiving a radio resource control (RRC) protocol data unit (PDU), containing control-plane signaling, transmitted from a cloud-based control unit (CCU), wherein the RRC PDU containing control-plane signaling is allocated a sequence number by the CCU, and RRC PDUs corresponding to different SRBs are ordered separately; and transmitting the RRC PDU containing control-plane signaling to the terminal, wherein the RRC PDU containing control-plane signaling is used for duplicate detection by the terminal.

9. A method for control-plane signaling transmission, performed by a cloud-based control unit (CCU), comprising:
establishing, in a second distributed data unit (DDU), an air interface protocol stack corresponding to a target signaling radio bearer (SRB) of a terminal, wherein the air interface protocol stack corresponding to the target SRB is used to be activated by the second DDU in case that the terminal moves from a service range of a first DDU to a service range of the second DDU, wherein the target SRB is continuous between the first DDU and the second DDU.

10. The method of claim 9, wherein establishing the air interface protocol stack corresponding to the target SRB of the terminal in the second DDU comprises:
transmitting control-plane signaling configuration information to DDUs within a coverage range before the terminal moves from the service range of the first DDU to the service range of the second DDU, wherein the DDUs within the coverage range comprise the second DDU, and the control-plane signaling configuration information is used for the second DDU to establish the air interface protocol stack corresponding to the target SRB of the terminal.

11. The method of claim 9, wherein establishing the air interface protocol stack corresponding to the target SRB of the terminal in the second DDU comprises:
transmitting control-plane signaling configuration information to the second DDU in case that the terminal moves from the service range of the first DDU to the service range of the second DDU, wherein the control-plane signaling configuration information is used for the second DDU to establish the air interface protocol stack corresponding to the target SRB of the terminal.

12. The method of claim 11, wherein before transmitting the control-plane signaling configuration information to the second DDU, the method further comprises:
receiving first information transmitted from the second DDU, wherein the first information is used to request for the control-plane signaling configuration information.

13. The method of claim 9, further comprising:
transmitting a transmission state report of the target SRB to the second DDU in case that the terminal moves from the service range of the first DDU to the service range of the second DDU.

14. The method of claim 13, wherein the transmission state report of the target SRB comprises one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

15. The method of claim 9, further comprising:
transmitting a first packet data convergence protocol (PDCP) service data unit (SDU) to the second DDU in case that the terminal moves from the service range of the first DDU to the service range of the second DDU, wherein the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;
or,
the method further comprises:
transmitting a packet data convergence protocol (PDCP) service data unit (SDU) containing downlink control-plane signaling not successfully received by the first DDU to the second DDU in case that the terminal moves from the service range of the first DDU to the service range of the second DDU.

16. The method of claim 9, further comprising:
receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, wherein the RRC PDU containing control-plane signaling is allocated a sequence number by the CCU, and RRC PDUs corresponding to different SRBs are ordered separately; and
performing duplicate detection on the RRC PDU, containing control-plane signaling, transmitted from the first DDU and the RRC PDU, containing control-plane signaling, transmitted from the second DDU.

17. The method of claim 9, further comprising:
transmitting a radio resource control (RRC) protocol data unit (PDU) containing control-plane signaling to the second DDU in case that the terminal moves from the service range of the first DDU to the service range of the second DDU, wherein the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

18. The method of claim 16 or 17, further comprising:
allocating a sequence number for the RRC PDU containing control-plane signaling, wherein RRC PDUs corresponding to different SRBs are ordered separately.

19. A method for control-plane signaling transmission, performed by a terminal, comprising:
transmitting control-plane signaling with a second distributed data unit (DDU) in case that the terminal moves from a service range of a first DDU to a service range of a second DDU, wherein the control-plane signaling is transmitted after an air interface protocol stack corresponding to a target signaling radio bearer (SRB) of the terminal is activated by the second DDU, and the target SRB is continuous between the first DDU and the second DDU.

20. The method of claim 19, wherein transmitting the control-plane signaling with the second DDU comprises:
receiving a transmission state report of the target SRB, wherein the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, transmitting the control-plane signaling with the second DDU comprises:
receiving a packet data convergence protocol (PDCP) protocol data unit (PDU), containing downlink control-plane signaling not successfully transmitted from the first DDU, transmitted from the second DDU.

21. The method of claim 19, further comprising:
receiving a radio resource control (RRC) protocol data unit (PDU), containing control-plane signaling, transmitted from the first DDU and an RRC PDU, containing control-plane signaling, transmitted from the second DDU, wherein the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the second DDU.

22. A second distributed data unit (DDU), comprising a memory, a transceiver, and a processor, wherein
the memory is used for storing a computer program; the transceiver is used for receiving and transmitting data under control of the processor; and the processor is used for reading the computer program stored in the memory and performing the following operations:
in case that a terminal moves from a service range of a first DDU to a service range of the second DDU, activating an air interface protocol stack corresponding to a target signaling radio bearer (SRB) of the terminal, wherein the target SRB is continuous between the first DDU and the second DDU; and
transmitting control-plane signaling with the terminal.

23. The second DDU of claim 22, wherein before the terminal moves from the service range of the first DDU to the service range of the second DDU, the processor is further used for reading the computer program stored in the memory and performing the following operations:
receiving control-plane signaling configuration information transmitted from a cloud-based control unit (CCU); and
establishing the air interface protocol stack corresponding to the target SRB based on the control-plane signaling configuration information.

24. The second DDU of claim 22, wherein the processor is further used for reading the computer program stored in the memory and performing the following operations:
receiving control-plane signaling configuration information transmitted from a cloud-based control unit (CCU); and
establishing the air interface protocol stack corresponding to the target SRB based on the control-plane signaling configuration information.

25. The second DDU of claim 24, wherein before receiving the control-plane signaling configuration information transmitted from the CCU, the processor is further used for reading the computer program stored in the memory and performing the following operations:
transmitting first information to the CCU, wherein the first information is used to request for the control-plane signaling configuration information.

26. The second DDU of claim 22, wherein the processor is further used for reading the computer program stored in the memory and performing the following operations:
receiving a transmission state report of the target SRB transmitted from the first DDU, wherein the first DDU is a DDU providing service to the terminal before the terminal moves to the service range of the second DDU.

27. The second DDU of claim 22, wherein the processor is further used for reading the computer program stored in the memory and performing the following operations:
receiving a transmission state report of the target SRB transmitted from a cloud-based control unit (CCU).

28. The second DDU of claim 26 or 27, wherein the transmission state report of the target SRB comprises one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

29. The second DDU of claim 22, wherein the processor is further used for reading the computer program stored in the memory and performing the following operations:
receiving a first packet data convergence protocol (PDCP) service data unit (SDU) transmitted from a cloud-based control unit (CCU); and allocating a sequence number for the first PDCP SDU based on a transmission state report of the target SRB, wherein the sequence number allocated for the first PDCP SDU is equal to a sequence number allocated for a next PDCP SDU as indicated in the transmission state report of the target SRB;
or,
the processor is further used for reading the computer program stored in the memory and performing the following operations:
receiving a packet data convergence protocol (PDCP) service data unit (SDU), containing downlink control-plane signaling not successfully received by the first DDU, transmitted from a cloud-based control unit (CCU);
or,
the processor is further used for reading the computer program stored in the memory and performing the following operations:
receiving a packet data convergence protocol (PDCP) service data unit (PDU), containing uplink control-plane signaling not successfully received by the first DDU, transmitted from the terminal;
or,
the processor is further used for reading the computer program stored in the memory and performing the following operations:
receiving, from the first DDU, a packet data convergence protocol (PDCP) service data unit (SDU) containing downlink control-plane signaling not successfully transmitted from the first DDU; and re-transmitting, to the terminal, based on a transmission state report of the target SRB, a packet data convergence protocol (PDCP) service data unit (SDU) containing downlink control-plane signaling not successfully transmitted from the first DDU, wherein a sequence number of the PDCP SDU, containing downlink control-plane signaling not successfully transmitted from the first DDU, re-transmitted to the terminal is equal to a sequence number of the PDCP SDU containing downlink control-plane signaling not successfully transmitted from the first DDU as indicated in the transmission state report of the target SRB;
or,
the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the terminal, wherein the RRC PDU containing control-plane signaling is allocated a sequence number by a cloud-based control unit (CCU), and RRC PDUs corresponding to different SRBs are ordered separately; and performing duplicate detection on the received RRC PDU, containing control-plane signaling, transmitted from the first DDU and the RRC PDU, containing control-plane signaling, transmitted from the terminal;
or,
the processor is further used for reading the computer program stored in the memory and performing the following operations:
receiving a radio resource control (RRC) protocol data unit (PDU), containing control-plane signaling, transmitted from the terminal, wherein the RRC PDU containing control-plane signaling is allocated a sequence number by a cloud-based control unit (CCU), and RRC PDUs corresponding to different SRBs are ordered separately; and transmitting the RRC PDU containing control-plane signaling to the CCU, wherein the RRC PDU containing control-plane signaling is used for duplicate detection by the CCU;
or,
the processor is further used for reading the computer program stored in the memory and performing the following operations:
receiving a radio resource control (RRC) protocol data unit (PDU), containing control-plane signaling, transmitted from a cloud-based control unit (CCU), wherein the RRC PDU containing control-plane signaling is allocated a sequence number by the CCU, and RRC PDUs corresponding to different SRBs are ordered separately; and transmitting the RRC PDU containing control-plane signaling to the terminal, wherein the RRC PDU containing control-plane signaling is used for duplicate detection by the terminal.

30. A cloud-based control unit (CCU), comprising a memory, a transceiver, and a processor, wherein
the memory is used for storing a computer program; the transceiver is used for receiving and transmitting data under control of the processor; and the processor is used for reading the computer program stored in the memory and performing the following operations:
establishing, in a second distributed data unit (DDU), an air interface protocol stack corresponding to a target signaling radio bearer (SRB) of a terminal, wherein the air interface protocol stack corresponding to the target SRB is used to be activated by the second DDU in case that the terminal moves from a service range of a first DDU to a service range of the second DDU, wherein the target SRB is continuous between the first DDU and the second DDU.

31. The CCU of claim 30, wherein the processor is further used for reading the computer program stored in the memory and performing the following operations:
establishing the air interface protocol stack corresponding to the target SRB of the terminal in the second DDU comprises:
transmitting control-plane signaling configuration information to DDUs within a coverage range before the terminal moves from the service range of the first DDU to the service range of the second DDU, wherein the DDUs within the coverage range comprise the second DDU, and the control-plane signaling configuration information is used for the second DDU to establish the air interface protocol stack corresponding to the target SRB of the terminal.

32. The CCU of claim 30, wherein the processor is further used for reading the computer program stored in the memory and performing the following operations:
establishing the air interface protocol stack corresponding to the target SRB of the terminal in the second DDU comprises:
transmitting control-plane signaling configuration information to the second DDU in case that the terminal moves from the service range of the first DDU to the service range of the second DDU, wherein the control-plane signaling configuration information is used for the second DDU to establish the air interface protocol stack corresponding to the target SRB of the terminal.

33. The CCU of claim 32, wherein before transmitting the control-plane signaling configuration information to the second DDU, the processor is further used for reading the computer program stored in the memory and performing the following operations:
receiving first information transmitted from the second DDU, wherein the first information is used to request for the control-plane signaling configuration information.

34. The CCU of claim 30, wherein the processor is further used for reading the computer program stored in the memory and performing the following operations:
transmitting a transmission state report of the target SRB to the second DDU in case that the terminal moves from the service range of the first DDU to the service range of the second DDU.

35. The CCU of claim 34, wherein the transmission state report of the target SRB comprises one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

36. The CCU of claim 30, wherein the processor is further used for reading the computer program stored in the memory and performing the following operations:
transmitting a first packet data convergence protocol (PDCP) service data unit (SDU) to the second DDU in case that the terminal moves from the service range of the first DDU to the service range of the second DDU, wherein the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;
or, the processor is further used for reading the computer program stored in the memory and performing the following operations:
transmitting a packet data convergence protocol (PDCP) service data unit (SDU) containing downlink control-plane signaling not successfully received by the first DDU to the second DDU in case that the terminal moves from the service range of the first DDU to the service range of the second DDU.

37. The CCU of claim 30, wherein the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, wherein the RRC PDU containing control-plane signaling is allocated a sequence number by the CCU, and RRC PDUs corresponding to different SRBs are ordered separately; and
performing duplicate detection on the RRC PDU, containing control-plane signaling, transmitted from the first DDU and the RRC PDU, containing control-plane signaling, transmitted from the second DDU.

38. The CCU of claim 30, wherein the processor is further used for reading the computer program stored in the memory and performing the following operations:
transmitting a radio resource control (RRC) protocol data unit (PDU) containing control-plane signaling to the second DDU in case that the terminal moves from the service range of the first DDU to the service range of the second DDU, wherein the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

39. The CCU of claim 37 or 38, wherein the processor is further used for reading the computer program stored in the memory and performing the following operations:
allocating a sequence number for the RRC PDU containing control-plane signaling, wherein RRC PDUs corresponding to different SRBs are ordered separately.

40. A terminal, comprising a memory, a transceiver, and a processor, wherein
the memory is used for storing a computer program; the transceiver is used for receiving and transmitting data under control of the processor; and the processor is used for reading the computer program stored in the memory and performing the following operations:
transmitting control-plane signaling with a second distributed data unit (DDU) in case that the terminal moves from a service range of a first DDU to a service range of a second DDU, wherein the control-plane signaling is transmitted after an air interface protocol stack corresponding to a target signaling radio bearer (SRB) of the terminal is activated by the second DDU, and the target SRB is continuous between the first DDU and the second DDU.

41. The terminal of claim 40, wherein the processor is further used for reading the computer program stored in the memory and performing the following operations:
transmitting the control-plane signaling with the second DDU comprises:
receiving a transmission state report of the target SRB, wherein the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, the processor is further used for reading the computer program stored in the memory and performing the following operations:
transmitting the control-plane signaling with the second DDU comprises:
receiving a packet data convergence protocol (PDCP) protocol data unit (PDU), containing downlink control-plane signaling not successfully transmitted from the first DDU, transmitted from the second DDU.

42. The terminal of claim 40, wherein the processor is further used for reading the computer program stored in the memory and performing the following operations:
receiving a radio resource control (RRC) protocol data unit (PDU), containing control-plane signaling, transmitted from the first DDU and an RRC PDU, containing control-plane signaling, transmitted from the second DDU, wherein the RRC PDU containing control-plane signaling is allocated a sequence number by a cloud-based control unit (CCU), and RRC PDUs corresponding to different SRBs are ordered separately; and
performing duplicate detection on the received RRC PDU, containing control-plane signaling, transmitted from the first DDU and the RRC PDU, containing control-plane signaling, transmitted from the second DDU.

43. An apparatus for control-plane signaling transmission, comprising:
a first activating module, used for in case that a terminal moves from a service range of a first distributed data unit (DDU) to a service range of a second DDU, activating an air interface protocol stack corresponding to a target signaling radio bearer (SRB) of the terminal, wherein the target SRB is continuous between the first DDU and the second DDU; and
a first transmitting module, used for transmitting control-plane signaling with the terminal.

44. The apparatus of claim 43, further comprising:
a first receiving module, used for receiving control-plane signaling configuration information transmitted from a cloud-based control unit (CCU) before the terminal moves from the service range of the first DDU to the service range of the second DDU; and
a second establishing module, used for establishing the air interface protocol stack corresponding to the target SRB based on the control-plane signaling configuration information before the terminal moves from the service range of the first DDU to the service range of the second DDU.

45. The apparatus of claim 43, further comprising:
a second receiving module, used for receiving control-plane signaling configuration information transmitted from a cloud-based control unit (CCU); and
a third establishing module, used for establishing the air interface protocol stack corresponding to the target SRB based on the control-plane signaling configuration information.

46. The apparatus of claim 45, further comprising:
a first transmitting module, used for transmitting first information to the CCU before receiving the control-plane signaling configuration information transmitted from the CCU, wherein the first information is used to request for the control-plane signaling configuration information.

47. The apparatus of claim 43, further comprising:
a third receiving module, used for receiving a transmission state report of the target SRB transmitted from the first DDU, wherein the first DDU is a DDU providing service to the terminal before the terminal moves to the service range of the second DDU.

48. The apparatus of claim 43, further comprising:
a fourth receiving module, used for receiving a transmission state report of the target SRB transmitted from a cloud-based control unit (CCU).

49. The apparatus of claim 47 or 48, wherein the transmission state report of the target SRB comprises one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

50. The apparatus of claim 43, further comprising:
a fifth receiving module, used for receiving a first packet data convergence protocol (PDCP) service data unit (SDU) transmitted from a cloud-based control unit (CCU); and a first allocating module, used for allocating a sequence number for the first PDCP SDU based on a transmission state report of the target SRB, wherein the sequence number allocated for the first PDCP SDU is equal to a sequence number allocated for a next PDCP SDU as indicated in the transmission state report of the target SRB;
or,
the apparatus further comprising:
a sixth receiving module, used for receiving a packet data convergence protocol (PDCP) service data unit (SDU), containing downlink control-plane signaling not successfully received by the first DDU, transmitted from a cloud-based control unit (CCU);
or,
the apparatus further comprising:
a seventh receiving module, used for receiving a packet data convergence protocol (PDCP) service data unit (SDU) containing uplink control-plane signaling not successfully received by the first DDU transmitted from the terminal;
or,
the apparatus further comprising:
an eighth receiving module, used for receiving, from the first DDU, a packet data convergence protocol (PDCP) service data unit (SDU) containing downlink control-plane signaling not successfully transmitted from the first DDU; and a second transmitting module, used for re-transmitting, to the terminal, based on a transmission state report of the target SRB, a packet data convergence protocol (PDCP) service data unit (SDU) containing downlink control-plane signaling not successfully transmitted from the first DDU, wherein a sequence number of the PDCP SDU, containing downlink control-plane signaling not successfully transmitted from the first DDU, re-transmitted to the terminal is equal to a sequence number of the PDCP SDU containing downlink control-plane signaling not successfully transmitted from the first DDU as indicated in the transmission state report of the target SRB;
or,
the apparatus further comprising:
a ninth receiving module, used for receiving a radio resource control (RRC) protocol data unit (PDU), containing control-plane signaling, transmitted from the first DDU and an RRC PDU, containing control-plane signaling, transmitted from the terminal, wherein the RRC PDU containing control-plane signaling is allocated a sequence number by a cloud-based control unit (CCU), and RRC PDUs corresponding to different SRBs are ordered separately; and a first detecting module, used for performing duplicate detection on the received RRC PDU, containing control-plane signaling, transmitted from the first DDU and the RRC PDU, containing control-plane signaling, transmitted from the terminal;
or,
the apparatus further comprising:
a tenth receiving module, used for receiving a radio resource control (RRC) protocol data unit (PDU), containing control-plane signaling, transmitted from the terminal, wherein the RRC PDU containing control-plane signaling is allocated a sequence number by a cloud-based control unit (CCU), and RRC PDUs corresponding to different SRBs are ordered separately; and a third transmitting module, used for transmitting the RRC PDU containing control-plane signaling to the CCU, wherein the RRC PDU containing control-plane signaling is used for duplicate detection by the CCU;
or,
the apparatus further comprising:
an eleventh receiving module, used for receiving a radio resource control (RRC) protocol data unit (PDU), containing control-plane signaling, transmitted from a cloud-based control unit (CCU), wherein the RRC PDU containing control-plane signaling is allocated a sequence number by the CCU, and RRC PDUs corresponding to different SRBs are ordered separately; and a fourth transmitting module, used for transmitting the RRC PDU containing control-plane signaling to the terminal, wherein the RRC PDU containing control-plane signaling is used for duplicate detection by the terminal.

51. An apparatus for control-plane signaling transmission, comprising:
a first establishing module, used for establishing, in a second distributed data unit (DDU), an air interface protocol stack corresponding to a target signaling radio bearer (SRB) of a terminal, wherein the air interface protocol stack corresponding to the target SRB is used to be activated by the second DDU in case that the terminal moves from a service range of a first DDU to a service range of the second DDU, wherein the target SRB is continuous between the first DDU and the second DDU.

52. The apparatus of claim 51, wherein the first establishing module is further used for:
transmitting control-plane signaling configuration information to DDUs within a coverage range before the terminal moves from the service range of the first DDU to the service range of the second DDU, wherein the DDUs within the coverage range comprise the second DDU, and the control-plane signaling configuration information is used for the second DDU to establish the air interface protocol stack corresponding to the target SRB of the terminal.

53. The apparatus of claim 51, wherein the first establishing module is further used for:
transmitting control-plane signaling configuration information to the second DDU in case that the terminal moves from the service range of the first DDU to the service range of the second DDU, wherein the control-plane signaling configuration information is used for the second DDU to establish the air interface protocol stack corresponding to the target SRB of the terminal.

54. The apparatus of claim 53, further comprising:
a twelfth receiving module, used for receiving first information transmitted from the second DDU before transmitting control-plane signaling configuration information to the second DDU, wherein the first information is used to request for the control-plane signaling configuration information.

55. The apparatus of claim 51, further comprising:
a fifth transmitting module, used for transmitting a transmission state report of the target SRB to the second DDU in case that the terminal moves from the service range of the first DDU to the service range of the second DDU.

56. The apparatus of claim 55, wherein the transmission state report of the target SRB comprises one or more pieces of the following information:
a sequence number allocated for a next packet data convergence protocol (PDCP) service data unit (SDU);
a count value allocated for a next packet data convergence protocol (PDCP) service data unit (SDU);
a sequence number of a packet data convergence protocol (PDCP) service data unit (SDU) containing downlink control-plane signaling not successfully transmitted from the first DDU; or
a sequence number of a packet data convergence protocol (PDCP) protocol data unit (PDU) containing uplink control-plane signaling not successfully received by the first DDU.

57. The apparatus of claim 51, further comprising:
a sixth transmitting module, used for transmitting a first packet data convergence protocol (PDCP) service data unit (SDU) to the second DDU in case that the terminal moves from the service range of the first DDU to the service range of the second DDU, wherein the first PDCP SDU is used for the second DDU to allocate a sequence number based on a transmission state report of the target SRB, and a sequence number allocated for the first PDCP SDU is equal to a sequence number allocated for a next PDCP SDU as indicated in the transmission state report of the target SRB;
or, the apparatus further comprising:
a seventh transmitting module, used for transmitting a packet data convergence protocol (PDCP) service data unit (SDU) containing downlink control-plane signaling not successfully received by the first DDU to the second DDU in case that the terminal moves from the service range of the first DDU to the service range of the second DDU.

58. The apparatus of claim 51, further comprising:
a thirteenth receiving module, used for receiving a radio resource control (RRC) protocol data unit (PDU), containing control-plane signaling, transmitted from the first DDU and an RRC PDU, containing control-plane signaling, transmitted from the second DDU in case that the terminal moves from the service range of the first DDU to the service range of the second DDU, wherein the RRC PDU containing control-plane signaling is allocated a sequence number by a cloud-based control unit (CCU), and RRC PDUs corresponding to different SRBs are ordered separately; and
a second detecting module, used for performing duplicate detection on the RRC PDU, containing control-plane signaling, transmitted from the first DDU and the RRC PDU, containing control-plane signaling, transmitted from the second DDU.

59. The apparatus of claim 51, further comprising:
an eighth transmitting module, used for transmitting a radio resource control (RRC) protocol data unit (PDU) containing control-plane signaling to the second DDU in case that the terminal moves from the service range of the first DDU to the service range of the second DDU, wherein the RRC PDU containing control-plane signaling is allocated a sequence number by the CCU, RRC PDUs corresponding to different SRBs are ordered separately, and the RRC PDU containing control-plane signaling is used to be transmitted from the second DDU to the terminal for duplicate detection by the terminal.

60. The apparatus of claim 58 or 59, further comprising:
a second allocating module, used for allocating a sequence number for the RRC PDU containing control-plane signaling, wherein RRC PDUs corresponding to different SRBs are ordered separately.

61. An apparatus for control-plane signaling transmission, comprising:
a second transmitting module, used for transmitting control-plane signaling with a second distributed data unit (DDU) in case that a terminal moves from a service range of a first DDU to a service range of a second DDU, wherein the control-plane signaling is transmitted after an air interface protocol stack corresponding to a target signaling radio bearer (SRB) of the terminal is activated by the second DDU, and the target SRB is continuous between the first DDU and the second DDU.

62. The apparatus of claim 61, wherein the second transmitting module is further used for:
receiving a transmission state report of the target SRB, wherein the transmission state report of the target SRB is used to indicate a packet data convergence protocol (PDCP) protocol data unit (PDU) not successfully received by the first DDU; and
re-transmitting the PDCP PDU, containing uplink control-plane signaling, not successfully received by the first DDU to the second DDU;
or, the second transmitting module is further used for:
receiving a packet data convergence protocol (PDCP) protocol data unit (PDU), containing downlink control-plane signaling not successfully transmitted from the first DDU, transmitted from the second DDU.

63. The apparatus of claim 61, further comprising:
a fourteenth receiving module, used for receiving a radio resource control (RRC) protocol data unit (PDU), containing control-plane signaling, transmitted from the first DDU and an RRC PDU, containing control-plane signaling, transmitted from the second DDU, wherein the RRC PDU containing control-plane signaling is allocated a sequence number by a cloud-based control unit (CCU), and RRC PDUs corresponding to different SRBs are ordered separately; and
a third detecting module, used for performing duplicate detection on the received RRC PDU, containing control-plane signaling, transmitted from the first DDU and the RRC PDU, containing control-plane signaling, transmitted from the second DDU.

64. A computer-readable storage medium, wherein the computer-readable storage medium stores a computer program, and the computer program is used for causing a computer to perform the method for control-plane signaling transmission of any of claims 1 to 21.
